# EUROPEAN PATENT APPLICATION

(11) **EP 4 354 763 A1**
(43) Date of publication of application: **17.04.2024**
(21) Application number: 22810114.3
(22) Date of filing: 04.03.2022
(51) Int. Cl.: H04B 10/25

(54) **SIGNAL TRANSMITTING METHOD AND APPARATUS, ELECTRONIC DEVICE, AND STORAGE MEDIUM**

(30) Priority: 25.05.2021 CN 202110572825
(71) Applicant: Huawei Technologies Co., Ltd., Longgang Shenzhen, Guangdong 518129 (CN)
(72) Inventor: HUANG, Guojia, Shenzhen, Guangdong 518129 (CN); WANG, Weihua, Shenzhen, Guangdong 518129 (CN); LI, Jin, Shenzhen, Guangdong 518129 (CN)
(74) Representative: Huawei European IPR
(86) International application number: PCT/CN2022/079276
(87) International publication number: WO 2022/247380

(57) **Abstract**

This application discloses a signal sending method and apparatus, an electronic device, and a storage medium. The method includes: An optical module receives a first control signal, where the first control signal indicates the optical module to send a training signal to a network side device, and the optical module is connected to the network side device through an electrical signal link; and the optical module sends the training signal after receiving the first control signal, where the training signal is a signal to be used by the network side device to perform equalization parameter training. In this method, after the optical module is powered on, a control signal is used to control the optical module to send a training signal before the optical module transmits an upstream control signal, and equalization parameter training is performed by using the training signal to obtain a target equalization parameter, so that the target equalization parameter is used for subsequent equalization for the upstream control signal, to improve signal equalization efficiency.

## Description

This application claims priority to Chinese Patent Application No. 202110572825.0, filed with the China National Intellectual Property Administration on May 25, 2021 and entitled "SIGNAL SENDING METHOD AND APPARATUS, ELECTRONIC DEVICE, AND STORAGE MEDIUM", which is incorporated herein by reference in its entirety.

### TECHNICAL FIELD

This application relates to the field of signal processing technologies, and in particular, to a signal sending method and apparatus, an electronic device, and a storage medium.

### BACKGROUND

In a digital communication system, due to impact of channel attenuation and the like, a transmitted signal encounters severe inter-symbol interference (inter-symbol interference, ISI) at a signal receiving end, resulting in an increase in a bit error rate. As a transmission rate of the transmitted signal increases, the bit error rate also significantly increases. To overcome the inter-symbol interference, reduce the bit error rate, and improve transmission performance of the communication system, a signal equalization technology is usually used at the signal receiving end. The signal equalization technology refers to a method used by a receiver/transmitter to equalize the transmitted signal based on a channel characteristic, that is, generate a signal whose characteristic is opposite to the channel characteristic, to reduce or eliminate inter-symbol interference caused by the channel characteristic in a transmission process of the transmitted signal.

At present, a method for testing a signal transmission device before the signal transmission device is put into use is usually used to obtain an optimal equalization parameter, and the optimal equalization parameter is fixedly written into the device, so that the device implements signal equalization by using the equalization parameter in a signal transmission process after the device is put into use.

However, when an optical module needs to be changed for the signal transmission device to meet a requirement such as a higher transmission rate, there is a high probability that the fixed equalization parameter used in the foregoing signal equalization method cannot meet a performance requirement of a new optical module on signal equalization. Therefore, the foregoing signal equalization method has low efficiency.

### SUMMARY

Embodiments of this application provide a signal sending method and apparatus, an electronic device, and a storage medium. After an optical module is powered on, a control signal is used to control the optical module to send a training signal before the optical module transmits an upstream transmission signal, and equalization parameter training is performed by using the training signal to obtain a target equalization parameter, so that the target equalization parameter is used for subsequent equalization for the upstream control signal, to improve signal equalization efficiency.

According to a first aspect, an embodiment of this application provides a signal sending method, applied to an optical module. The method includes:
the optical module receives a first control signal, where the first control signal indicates the optical module to send a training signal to a network side device, and the optical module is connected to the network side device through an electrical signal link; and
the optical module sends the training signal, where the training signal is a signal to be used by the network side device to perform equalization parameter training.

In this embodiment of this application, after receiving the first control signal, the optical module sends the training signal to the network side device. The first control signal is sent by the network side device to the optical module, and indicates the optical module to send the training signal to the network side device, and the training signal is a signal to be used by the network side device to perform equalization parameter training. The optical module is connected to the network side device through the electrical signal link. The optical module is a pluggable optical module, and may perform electrical signal transmission with the network side device when being inserted into the network side device and powered on.

Compared with that in a current method in which a fixed equalization parameter is written into a device, in this embodiment of this application, the first control signal is used to control the optical module to send the training signal to the network side device after the optical module is powered on and before the optical module transmits the upstream control signal. The training signal is to be used by the network side device to perform equalization parameter training to obtain a target equalization parameter. Therefore, after the pluggable optical module is inserted into the network side device and is powered on, equalization parameter training of the electrical signal link can be completed without depending on light emitting of an optical network unit (Optical Network Unit, ONU). This resolves a dynamic equalization parameter training problem of a burst electrical signal link in a high-speed passive optical network (Passive Optical Network, PON) system, and improves signal equalization efficiency.

In a possible implementation, the training signal is a signal generated by the optical module; or
the training signal is a signal output by the optical module when the optical module receives a digital signal, and the digital signal is sent by the network side device to the optical module.

In this embodiment of this application, two different manners are provided for a source of the training signal sent by the optical module. The training signal may be a signal generated by an internal function module of the optical module based on a channel characteristic of the electrical signal link. After receiving the first control signal, the optical module sends the generated training signal to the network side device. Alternatively, the training signal may be a signal output by the optical module when the optical module receives a digital signal. The training signal may be understood as a signal generated after the digital signal received by the optical module is transmitted through the electrical signal link and then encounters electrical excitation due to the channel characteristic of the electrical signal link. After receiving the digital signal and the first control signal, the optical module sends the training signal to the network side device. The training signal obtained in this embodiment of this application carries the channel characteristic of the electrical signal link. Therefore, precision of a target equalization parameter subsequently obtained by performing equalization parameter training by using the training signal can be higher, so that signal equalization efficiency is improved.

In a possible implementation, the method further includes:
receiving a second control signal, where the second control signal indicates the optical module to send an upstream transmission signal to the network side device; and
sending the upstream transmission signal, where the upstream transmission signal is a signal equalized by using a target equalization parameter, and the target equalization parameter is obtained by performing equalization parameter training by using the training signal.

In this embodiment of this application, after receiving the second control signal, the optical module sends the upstream transmission signal to the network side device. The second control signal is sent by the network side device to the optical module when the network side device completes equalization parameter training, and indicates the optical module to send the upstream transmission signal to the network side device. The upstream transmission signal is a signal equalized by the network side device by using the target equalization parameter, and the target equalization parameter is an equalization parameter obtained by the network side device by performing equalization parameter training by using the training signal sent by the optical module. In this embodiment of this application, the second control signal is used to control the optical module to send the upstream transmission signal to the network side device after the network side device completes equalization parameter training, so that the network side device can equalize the upstream transmission signal by using the target equalization parameter, to improve signal equalization efficiency.

In a possible implementation, the optical module includes a sequence generator and a first multiplexer, and the sequence generator is coupled to the first multiplexer;
that the optical module receives a first control signal includes:
the first multiplexer receives the first control signal; and
that the optical module sends the training signal includes:
   the first multiplexer controls, by using the first control signal, the sequence generator to send the training signal to the network side device, where the training signal is generated by the sequence generator.

In this embodiment of this application, a structure of a possible internal function module of the optical module is provided. The optical module includes the sequence generator and the first multiplexer, and the sequence generator is coupled to the first multiplexer. After receiving the first control signal, the first multiplexer controls, by using the first control signal, the sequence generator to send the training signal generated by the sequence generator to the network side device. An externalization expression thereof is as follows: After receiving the first control signal, the optical module sends the training signal to the network side device. The first multiplexer may specifically select the sequence generator as an output signal source, to control the sequence generator. The first multiplexer selects the sequence generator as the output signal source, so that when the optical module is just inserted into the network side device and powered on, and no ONU signal is input, the training signal generated by the sequence generator can be transmitted to the network side device through the first multiplexer and the electrical signal link, and used by the network side device to perform equalization parameter training to obtain the target equalization parameter. According to the structure of the internal function module of the optical module provided in this embodiment of this application, the sequence generator is added, so that after the pluggable optical module is inserted into the network side device and powered on, equalization parameter training of the electrical signal link is completed without depending on light emitting of an ONU. This resolves a dynamic equalization parameter training problem of a burst electrical signal link in a high-speed PON system, and improves signal equalization efficiency.

In a possible implementation, the optical module includes a first multiplexer and a second multiplexer, and the first multiplexer is coupled to the second multiplexer;
that the optical module receives a first control signal includes:
the first multiplexer receives the first control signal; and
that the optical module sends the training signal includes:
   the first multiplexer controls, by using the first control signal, the second multiplexer to send the training signal to the network side device, where the training signal is a signal output by the first multiplexer when the second multiplexer receives a digital signal, and the digital signal is sent by the network side device to the second multiplexer.

In this embodiment of this application, a structure of another possible internal function module of the optical module is provided. The optical module includes the first multiplexer and the second multiplexer, and the first multiplexer is coupled to the second multiplexer. After receiving the first control signal, the first multiplexer controls, by using the first control signal, the second multiplexer to send the training signal to the network side device, where the training signal is a signal output by the first multiplexer when the second multiplexer receives the digital signal, and the digital signal is sent by the network side device to the second multiplexer. An externalization expression thereof is as follows: After receiving the first control signal and the digital signal, the optical module sends the training signal to the network side device. The first multiplexer may specifically select the second multiplexer as an output signal source, to control the second multiplexer. The first multiplexer selects the second multiplexer as the output signal source, so that when the optical module is just inserted into the network side device and powered on, and no ONU signal is input, the digital signal received by the second multiplexer can be transmitted to the network side device through the second multiplexer, the first multiplexer, and the electrical signal link, and used by the network side device to perform equalization parameter training to obtain the target equalization parameter. According to the structure of the internal function module of the optical module provided in this embodiment of this application, a sequence generator does not need to be added, but two multiplexers are used, so that after the pluggable optical module is inserted into the network side device and powered on, equalization parameter training of the electrical signal link is completed without depending on light emitting of an ONU. This resolves a dynamic equalization parameter training problem of a burst electrical signal link in a high-speed PON system, and improves signal equalization efficiency.

In a possible implementation, the optical module further includes an amplifier, and the amplifier is coupled to the first multiplexer;
the receiving a second control signal includes:
the first multiplexer receives the second control signal; and
the sending the upstream transmission signal includes:
   the first multiplexer controls, by using the second control signal, the amplifier to send the upstream transmission signal to the network side device.

In this embodiment of this application, a structure of another possible internal function module of the optical module is provided. The optical module further includes the amplifier in addition to including the sequence generator and the first multiplexer or including the first multiplexer and the second multiplexer. The amplifier is coupled to the first multiplexer. After receiving the second control signal, the first multiplexer controls, by using the second control signal, the amplifier to send the upstream transmission signal to the network side device. An externalization expression thereof is as follows: After receiving the second control signal, the optical module sends the upstream transmission signal to the network side device. The first multiplexer may specifically select the amplifier as an output signal source, to control the amplifier. The first multiplexer selects the amplifier as the output signal source, so that after the network side device completes equalization parameter training, when an ONU signal is input, the upstream transmission signal input through the amplifier can be transmitted to the network side device through the first multiplexer and the electrical signal link, and the network side device equalizes the upstream transmission signal by using the target equalization parameter obtained through equalization parameter training. According to the structure of the internal function module of the optical module provided in this embodiment of this application, based on the structure of the foregoing module, the amplifier is coupled to the first multiplexer, to control to separately send the training signal and the upstream transmission signal to the network side device in different phases, so that the network side device completes equalization parameter training of the electrical signal link without depending on light emitting of an ONU, and an equalization parameter training process and a subsequent process of equalizing the upstream transmission signal do not interfere with each other. This resolves a dynamic equalization parameter training problem of a burst electrical signal link in a high-speed PON system, and improves signal equalization efficiency.

According to a second aspect, an embodiment of this application provides a signal equalization method. The method includes:
a network side device outputs a first control signal, where the first control signal indicates an optical module to send a training signal to the network side device, and the network side device is connected to the optical module through an electrical signal link;
the network side device receives the training signal; and
the network side device performs equalization parameter training by using the training signal, to obtain a target equalization parameter, where the target equalization parameter is used to equalize an upstream transmission signal.

In this embodiment of this application, after sending the first control signal to the optical module, the network side device receives the training signal sent by the optical module, and then performs equalization parameter training by using the received training signal, to obtain the target equalization parameter. The first control signal indicates the optical module to send the training signal to the network side device, and the target equalization parameter is used to equalize the subsequently received upstream transmission signal. The network side device is connected to the optical module through the electrical signal link. The optical module is a pluggable optical module, and may perform electrical signal transmission with the network side device when being inserted into the network side device and powered on.

Compared with that in a current method in which a fixed equalization parameter is written into a device, in this embodiment of this application, the first control signal is used to control the optical module to send the training signal to the network side device after the optical module is powered on and before the optical module transmits the upstream control signal. Then, the network side device performs equalization parameter training by using the training signal, to obtain the target equalization parameter. Therefore, after the pluggable optical module is inserted into the network side device and is powered on, equalization parameter training of the electrical signal link is completed without depending on light emitting of an ONU, and an equalization parameter training process and a subsequent process of equalizing the upstream transmission signal do not interfere with each other. This resolves a dynamic equalization parameter training problem of a burst electrical signal link in a high-speed PON system, and improves equalization parameter training efficiency and signal equalization efficiency.

In a possible implementation, the training signal is a signal generated by the optical module.

In this embodiment of this application, a possible manner is provided for a source of the training signal sent by the optical module. The training signal may be a signal generated by an internal function module of the optical module based on a channel characteristic of the electrical signal link between the optical module and the network side device. After receiving the first control signal sent by the network side device, the optical module sends the generated training signal to the network side device. The training signal obtained in this embodiment of this application carries the channel characteristic of the electrical signal link between the network side device and the optical module. Therefore, precision of a target equalization parameter subsequently obtained by performing equalization parameter training by using the training signal can be higher, so that signal equalization efficiency is improved.

In a possible implementation, the training signal is a signal output by the optical module when the optical module receives a digital signal, and the digital signal is sent by the network side device to the optical module.

In this embodiment of this application, another possible manner is provided for a source of the training signal sent by the optical module. Alternatively, the training signal may be a signal output by the optical module when the optical module receives the digital signal sent by the network side device. The training signal may be understood as a signal generated after the digital signal received by the optical module is transmitted through the electrical signal link and then encounters electrical excitation due to the channel characteristic of the electrical signal link. After receiving the digital signal and the first control signal, the optical module sends the training signal to the network side device. The training signal obtained in this embodiment of this application carries the channel characteristic of the electrical signal link between the network side device and the optical module. Therefore, precision of a target equalization parameter subsequently obtained by performing equalization parameter training by using the training signal can be higher, so that signal equalization efficiency is improved.

In a possible implementation, the outputting a first control signal includes:
outputting the first control signal when detecting that the optical module is inserted into the network side device and is powered on.

In this embodiment of this application, when detecting that the optical module is inserted into the network side device and is powered on, the network side device outputs the first control signal, to control the optical module to send the training signal to the network side device, to perform equalization parameter training. In this embodiment of this application, a control signal is sent to the optical module for control by detecting an insertion status and a power-on status of the optical module, so that the training signal can be obtained when no ONU signal is input, to complete equalization parameter training. This improves equalization parameter training efficiency and improves signal equalization efficiency.

In a possible implementation, the method further includes:
outputting a second control signal, where the second control signal indicates the optical module to send the upstream transmission signal to the network side device;
receiving the upstream transmission signal; and
equalizing the upstream transmission signal by using the target equalization parameter.

In this embodiment of this application, when completing equalization parameter training, the network side device sends the second control signal to the optical module, to indicate the optical module to send the upstream transmission signal to the network side device. After receiving the upstream transmission signal, the network side device performs signal equalization on the upstream transmission signal by using the target equalization parameter obtained through equalization parameter training. In this embodiment of this application, the second control signal is used to control the optical module to send the upstream transmission signal to the network side device after the network side device completes equalization parameter training, so that the network side device can equalize the upstream transmission signal by using the target equalization parameter. In addition, because the optical module is controlled to separately send the training signal and the upstream transmission signal to the network side device in different phases, effect that a process in which the network side device equalizes the upstream transmission signal and the foregoing equalization parameter training process do not interfere with each other can be achieved. This resolves a dynamic equalization parameter training problem of a burst electrical signal link in a high-speed PON system, and improves equalization parameter training efficiency and signal equalization efficiency.

According to a third aspect, an embodiment of this application provides a signal sending apparatus, used in an optical module. The apparatus includes:
a receiving unit, configured to receive a first control signal, where the first control signal indicates the signal sending apparatus to send a training signal to a network side device, and the signal sending apparatus is connected to the network side device through an electrical signal link; and
a sending unit, configured to send the training signal, where the training signal is a signal to be used by the network side device to perform equalization parameter training.

In this embodiment of this application, after receiving the first control signal, the signal sending apparatus sends the training signal to the network side device. The first control signal is sent by the network side device to the signal sending apparatus, and indicates the signal sending apparatus to send the training signal to the network side device, and the training signal is a signal to be used by the network side device to perform equalization parameter training. The signal sending apparatus is connected to the network side device through the electrical signal link. The signal sending apparatus is a pluggable signal sending apparatus, and may perform electrical signal transmission with the network side device when being inserted into the network side device and powered on.

Compared with that in a current method in which a fixed equalization parameter is written into a device, in this embodiment of this application, the first control signal is used to control the signal sending apparatus to send the training signal to the network side device after the signal sending apparatus is powered on and before the signal sending apparatus transmits the upstream control signal. The training signal is to be used by the network side device to perform equalization parameter training to obtain a target equalization parameter. Therefore, after the pluggable signal sending apparatus is inserted into the network side device and is powered on, equalization parameter training of the electrical signal link can be completed without depending on light emitting of an ONU. This resolves a dynamic equalization parameter training problem of a burst electrical signal link in a high-speed PON system, and improves signal equalization efficiency.

In a possible implementation, the training signal is a signal generated by the signal sending apparatus; or
the training signal is a signal output by the signal sending apparatus when the signal sending apparatus receives a digital signal, and the digital signal is sent by the network side device to the signal sending apparatus.

In this embodiment of this application, two different manners are provided for a source of the training signal sent by the signal sending apparatus. The training signal may be a signal generated by an internal function module of the signal sending apparatus based on a channel characteristic of the electrical signal link. After receiving the first control signal, the signal sending apparatus sends the generated training signal to the network side device. Alternatively, the training signal may be a signal output by the signal sending apparatus when the signal sending apparatus receives a digital signal. The training signal may be understood as a signal generated after the digital signal received by the signal sending apparatus is transmitted through the electrical signal link and then encounters electrical excitation due to the channel characteristic of the electrical signal link. After receiving the digital signal and the first control signal, the signal sending apparatus sends the training signal to the network side device. The training signal obtained in this embodiment of this application carries the channel characteristic of the electrical signal link. Therefore, precision of a target equalization parameter subsequently obtained by performing equalization parameter training by using the training signal can be higher, so that signal equalization efficiency is improved.

In a possible implementation, the receiving unit is further configured to receive a second control signal, where the second control signal indicates the signal sending apparatus to send an upstream transmission signal to the network side device; and
the sending unit is further configured to send the upstream transmission signal, where the upstream transmission signal is a signal equalized by using a target equalization parameter, and the target equalization parameter is obtained by performing equalization parameter training by using the training signal.

In this embodiment of this application, after receiving the second control signal, the signal sending apparatus sends the upstream transmission signal to the network side device. The second control signal is sent by the network side device to the signal sending apparatus when the network side device completes equalization parameter training, and indicates the signal sending apparatus to send the upstream transmission signal to the network side device. The upstream transmission signal is a signal equalized by the network side device by using the target equalization parameter, and the target equalization parameter is an equalization parameter obtained by the network side device by performing equalization parameter training by using the training signal sent by the signal sending apparatus. In this embodiment of this application, the second control signal is used to control the signal sending apparatus to send the upstream transmission signal to the network side device after the network side device completes equalization parameter training, so that the network side device can equalize the upstream transmission signal by using the target equalization parameter, to improve signal equalization efficiency.

In a possible implementation, the optical module includes a sequence generator and a first multiplexer, and the sequence generator is coupled to the first multiplexer;
the first multiplexer is configured to receive the first control signal transmitted by the receiving unit; and
the first multiplexer is further configured to control, by using the first control signal, the sequence generator to send the training signal to the sending unit, where the training signal is generated by the sequence generator.

In this embodiment of this application, a structure of a possible internal function module of the optical module is provided. The optical module includes the sequence generator and the first multiplexer, and the sequence generator is coupled to the first multiplexer. After receiving the first control signal transmitted by the receiving unit, the first multiplexer controls, by using the first control signal, the sequence generator to send the training signal generated by the sequence generator to the sending unit. An externalization expression thereof is as follows: After receiving the first control signal, the optical module sends the training signal to the network side device. The first multiplexer may specifically select the sequence generator as an output signal source, to control the sequence generator. The first multiplexer selects the sequence generator as the output signal source, so that when the optical module is just inserted into the network side device and powered on, and no ONU signal is input, the training signal generated by the sequence generator can be transmitted to the network side device through the first multiplexer and the electrical signal link, and used by the network side device to perform equalization parameter training to obtain the target equalization parameter. According to the structure of the internal function module of the optical module provided in this embodiment of this application, the sequence generator is added, so that after the pluggable optical module is inserted into the network side device and powered on, equalization parameter training of the electrical signal link is completed without depending on light emitting of an ONU. This resolves a dynamic equalization parameter training problem of a burst electrical signal link in a high-speed PON system, and improves signal equalization efficiency.

In a possible implementation, the optical module includes a first multiplexer and a second multiplexer, and the first multiplexer is coupled to the second multiplexer;
the first multiplexer is configured to receive the first control signal transmitted by the receiving unit; and
the first multiplexer is further configured to control, by using the first control signal, the second multiplexer to send the training signal to the sending unit, where the training signal is a signal output by the first multiplexer when the second multiplexer receives a digital signal, and the digital signal is transmitted by the receiving unit to the second multiplexer.

In this embodiment of this application, a structure of another possible internal function module of the optical module is provided. The optical module includes the first multiplexer and the second multiplexer, and the first multiplexer is coupled to the second multiplexer. After receiving the first control signal transmitted by the receiving unit, the first multiplexer controls, by using the first control signal, the second multiplexer to send the training signal to the sending unit, where the training signal is a signal output by the first multiplexer when the second multiplexer receives the digital signal, and the digital signal is transmitted by the receiving unit to the second multiplexer. An externalization expression thereof is as follows: After receiving the first control signal and the digital signal, the optical module sends the training signal to the network side device. The first multiplexer may specifically select the second multiplexer as an output signal source, to control the second multiplexer. The first multiplexer selects the second multiplexer as the output signal source, so that when the optical module is just inserted into the network side device and powered on, and no ONU signal is input, the digital signal received by the second multiplexer can be transmitted to the network side device through the second multiplexer, the first multiplexer, and the electrical signal link, and used by the network side device to perform equalization parameter training to obtain the target equalization parameter. According to the structure of the internal function module of the optical module provided in this embodiment of this application, a sequence generator does not need to be added, but two multiplexers are used, so that after the pluggable optical module is inserted into the network side device and powered on, equalization parameter training of the electrical signal link is completed without depending on light emitting of an ONU. This resolves a dynamic equalization parameter training problem of a burst electrical signal link in a high-speed PON system, and improves signal equalization efficiency.

In a possible implementation, the optical module further includes an amplifier, and the amplifier is coupled to the first multiplexer;
the first multiplexer is further configured to receive the second control signal; and
the first multiplexer is further configured to control, by using the second control signal, the amplifier to send the upstream transmission signal to the sending unit.

In this embodiment of this application, a structure of another possible internal function module of the optical module is provided. The optical module further includes the amplifier in addition to including the sequence generator and the first multiplexer or including the first multiplexer and the second multiplexer. The amplifier is coupled to the first multiplexer. After receiving the second control signal, the first multiplexer controls, by using the second control signal, the amplifier to send the upstream transmission signal to the sending unit. An externalization expression thereof is as follows: After receiving the second control signal, the optical module sends the upstream transmission signal to the network side device. The first multiplexer may specifically select the amplifier as an output signal source, to control the amplifier. The first multiplexer selects the amplifier as the output signal source, so that after the network side device completes equalization parameter training, when an ONU signal is input, the upstream transmission signal input through the amplifier can be transmitted to the network side device through the first multiplexer and the electrical signal link, and the network side device equalizes the upstream transmission signal by using the target equalization parameter obtained through equalization parameter training. According to the structure of the internal function module of the optical module provided in this embodiment of this application, based on the structure of the foregoing module, the amplifier is coupled to the first multiplexer, to control to separately send the training signal and the upstream transmission signal to the network side device in different phases, so that the network side device completes equalization parameter training of the electrical signal link without depending on light emitting of an ONU, and an equalization parameter training process and a subsequent process of equalizing the upstream transmission signal do not interfere with each other. This resolves a dynamic equalization parameter training problem of a burst electrical signal link in a high-speed PON system, and improves signal equalization efficiency.

According to a fourth aspect, an embodiment of this application provides a signal equalization apparatus. The apparatus includes:
a sending unit, configured to output a first control signal, where the first control signal indicates an optical module to send a training signal to the signal equalization apparatus, and the signal equalization apparatus is connected to the optical module through an electrical signal link;
a receiving unit, configured to receive the training signal; and
a training unit, configured to perform equalization parameter training by using the training signal, to obtain a target equalization parameter, where the target equalization parameter is used to equalize an upstream transmission signal.

In this embodiment of this application, after sending the first control signal to the optical module, the signal equalization apparatus receives the training signal sent by the optical module, and then performs equalization parameter training by using the received training signal, to obtain the target equalization parameter. The first control signal indicates the optical module to send the training signal to the signal equalization apparatus, and the target equalization parameter is used to equalize the subsequently received upstream transmission signal. The signal equalization apparatus is connected to the optical module through the electrical signal link. The optical module is a pluggable optical module, and may perform electrical signal transmission with the signal equalization apparatus when being inserted into the signal equalization apparatus and powered on.

Compared with that in a current method in which a fixed equalization parameter is written into a device, in this embodiment of this application, the first control signal is used to control the optical module to send the training signal to the signal equalization apparatus after the optical module is powered on and before the optical module transmits the upstream control signal. Then, the signal equalization apparatus performs equalization parameter training by using the training signal, to obtain the target equalization parameter. Therefore, after the pluggable optical module is inserted into the signal equalization apparatus and is powered on, equalization parameter training of the electrical signal link is completed without depending on light emitting of an ONU, and an equalization parameter training process and a subsequent process of equalizing the upstream transmission signal do not interfere with each other. This resolves a dynamic equalization parameter training problem of a burst electrical signal link in a high-speed PON system, and improves equalization parameter training efficiency and signal equalization efficiency.

In a possible implementation, the training signal is a signal generated by the optical module.

In this embodiment of this application, a possible manner is provided for a source of the training signal sent by the optical module. The training signal may be a signal generated by an internal function module of the optical module based on a channel characteristic of the electrical signal link between the optical module and the signal equalization apparatus. After receiving the first control signal sent by the signal equalization apparatus, the optical module sends the generated training signal to the signal equalization apparatus. The training signal obtained in this embodiment of this application carries the channel characteristic of the electrical signal link between the signal equalization apparatus and the optical module. Therefore, precision of a target equalization parameter subsequently obtained by performing equalization parameter training by using the training signal can be higher, so that signal equalization efficiency is improved.

In a possible implementation, the training signal is a signal output by the optical module when the optical module receives a digital signal, and the digital signal is sent by the signal equalization apparatus to the optical module.

In this embodiment of this application, another possible manner is provided for a source of the training signal sent by the optical module. Alternatively, the training signal may be a signal output by the optical module when the optical module receives the digital signal sent by the signal equalization apparatus. The training signal may be understood as a signal generated after the digital signal received by the optical module is transmitted through the electrical signal link and then encounters electrical excitation due to the channel characteristic of the electrical signal link. After receiving the digital signal and the first control signal, the optical module sends the training signal to the signal equalization apparatus. The training signal obtained in this embodiment of this application carries the channel characteristic of the electrical signal link between the signal equalization apparatus and the optical module. Therefore, precision of a target equalization parameter subsequently obtained by performing equalization parameter training by using the training signal can be higher, so that signal equalization efficiency is improved.

In a possible implementation, the sending unit is specifically configured to output the first control signal when it is detected that the optical module is inserted into the signal equalization apparatus and is powered on.

In this embodiment of this application, when detecting that the optical module is inserted into the signal equalization apparatus and is powered on, the signal equalization apparatus outputs the first control signal, to control the optical module to send the training signal to the signal equalization apparatus, to perform equalization parameter training. In this embodiment of this application, a control signal is sent to the optical module for control by detecting an insertion status and a power-on status of the optical module, so that the training signal can be obtained when no ONU signal is input, to complete equalization parameter training. This improves equalization parameter training efficiency and improves signal equalization efficiency.

In a possible implementation, the apparatus further includes:
the sending unit, further configured to output a second control signal, where the second control signal indicates the optical module to send the upstream transmission signal to the signal equalization apparatus;
the receiving unit, further configured to receive the upstream transmission signal; and
an equalization unit, configured to equalize the upstream transmission signal by using the target equalization parameter.

In this embodiment of this application, when completing equalization parameter training, the signal equalization apparatus sends the second control signal to the optical module, to indicate the optical module to send the upstream transmission signal to the signal equalization apparatus. After receiving the upstream transmission signal, the signal equalization apparatus performs signal equalization on the upstream transmission signal by using the target equalization parameter obtained through equalization parameter training. In this embodiment of this application, the second control signal is used to control the optical module to send the upstream transmission signal to the signal equalization apparatus after the signal equalization apparatus completes equalization parameter training, so that the signal equalization apparatus can equalize the upstream transmission signal by using the target equalization parameter. In addition, because the optical module is controlled to separately send the training signal and the upstream transmission signal to the signal equalization apparatus in different phases, effect that a process in which the signal equalization apparatus equalizes the upstream transmission signal and the foregoing equalization parameter training process do not interfere with each other can be achieved. This resolves a dynamic equalization parameter training problem of a burst electrical signal link in a high-speed PON system, and improves equalization parameter training efficiency and signal equalization efficiency.

According to a fifth aspect, an embodiment of this application provides a signal sending apparatus. The signal sending apparatus includes a processor and a communication interface, the communication interface is configured to receive or send a signal, and the processor is configured to execute computer-executable instructions, so that the signal sending apparatus performs the method according to any one of the first aspect and the possible implementations. Optionally, the signal sending apparatus further includes a memory, and the memory is configured to store the computer-executable instructions.

According to a sixth aspect, an embodiment of this application provides a signal equalization apparatus. The signal equalization apparatus includes a processor and a communication interface, the communication interface is configured to receive or send a signal, and the processor is configured to execute computer-executable instructions, so that the signal equalization apparatus performs the method according to any one of the second aspect and the possible implementations. Optionally, the signal sending apparatus further includes a memory, and the memory is configured to store the computer-executable instructions.

According to a seventh aspect, an embodiment of this application provides a computer-readable storage medium. The computer-readable storage medium is configured to store instructions or a computer program. When the instructions or the computer program are/is executed, the method according to any one of the first aspect and the possible implementations is implemented, or the method according to any one of the second aspect and the possible implementations is implemented.

According to an eighth aspect, an embodiment of this application provides a computer program product. The computer program product includes instructions or a computer program. When the instructions or the computer program are/is executed, the method according to any one of the first aspect and the possible implementations is implemented, or the method according to any one of the second aspect and the possible implementations is implemented.

According to a ninth aspect, an embodiment of this application provides a chip. The chip includes a processor and a communication interface. The processor is configured to invoke instructions from the communication interface and run the instructions. When the processor executes the instructions, the chip is enabled to perform the method according to any one of the first aspect and the possible implementations, or perform the method according to any one of the second aspect and the possible implementations.

According to a tenth aspect, an embodiment of this application provides a system. The system includes at least one signal sending apparatus according to the third aspect or the fifth aspect, at least one signal equalization apparatus according to the fourth aspect or the sixth aspect, or at least one chip according to the ninth aspect.

In addition, in a process of performing the method according to any one of the first aspect and the possible implementations, or the method according to any one of the second aspect and the possible implementations, a process of sending information (for example, a training signal) and/or receiving information in the foregoing method may be understood as a process of outputting information by a processor, and/or a process of receiving input information by the processor. When outputting the information, the processor may output the information to a transceiver (or a communication interface or a sending module), so that the transceiver transmits the information. After the information is output by the processor, other processing may further need to be performed on the information before the information arrives at the transceiver. Similarly, when the processor receives the input information, the transceiver (or the communication interface or the sending module) receives the information, and inputs the information into the processor. Further, after the transceiver receives the information, other processing may need to be performed on the information before the information is input into the processor.

Based on the foregoing principle, for example, sending information in the foregoing method may be understood as outputting information by the processor. For another example, receiving information may be understood as receiving input information by the processor.

Optionally, operations such as transmission, sending, and receiving related to the processor may be more generally understood as operations such as output, receiving, and input of the processor, unless otherwise specified, or provided that the operations do not contradict actual functions or internal logic of the operations in related descriptions.

Optionally, in an implementation process, the processor may be a processor specially configured to perform these methods, or a processor, for example, a general-purpose processor, that executes computer instructions in the memory to perform these methods. The memory may be a non-transitory (non-transitory) memory, for example, a read-only memory (Read-Only Memory, ROM). The memory and the processor may be integrated on a same chip, or may be separately disposed on different chips. A type of the memory and a manner of disposing the memory and the processor are not limited in this embodiment of this application.

In a possible implementation, the at least one memory is located outside a communication apparatus.

In another possible implementation, the at least one memory is located inside a communication apparatus.

In another possible implementation, some memories in the at least one memory are located in a communication apparatus, and the other memories are located outside the communication apparatus.

In this application, the processor and the memory may alternatively be integrated into one component. In other words, the processor and the memory may alternatively be integrated together.

In embodiments of this application, after an optical module is powered on, a control signal is used to control the optical module to send a training signal before the optical module transmits an upstream control signal, and equalization parameter training is performed by using the training signal to obtain a target equalization parameter, so that the target equalization parameter is used for subsequent equalization for the upstream control signal, to improve signal equalization efficiency.

### BRIEF DESCRIPTION OF DRAWINGS

To describe the technical solutions in embodiments of this application more clearly, the following briefly describes the accompanying drawings used in embodiments of this application. It is clear that, the accompanying drawings described below show merely some embodiments of this application, and a person of ordinary skill in the art may still derive other drawings from these accompanying drawings without creative efforts.
FIG. 1a is a schematic diagram of effect of inter-symbol interference according to an embodiment of this application;
FIG. 1b is a schematic diagram of effect of signal equalization according to an embodiment of this application;
FIG. 2a is a schematic diagram of an application scenario of a passive optical network according to an embodiment of this application;
FIG. 2b is a schematic diagram of an application scenario of an upstream transmission signal according to an embodiment of this application;
FIG. 3 is a schematic flowchart of a signal sending method according to an embodiment of this application;
FIG. 4 is a schematic flowchart of a signal equalization method according to an embodiment of this application;
FIG. 5 is a schematic flowchart of signal exchange according to an embodiment of this application;
FIG. 6 is a schematic diagram of a waveform of a digital signal according to an embodiment of this application;
FIG. 7 is a schematic diagram of a structure of a signal processing system according to an embodiment of this application;
FIG. 8 is a schematic diagram of a structure of another signal processing system according to an embodiment of this application;
FIG. 9 is a schematic diagram of a structure of a signal sending apparatus according to an embodiment of this application;
FIG. 10 is a schematic diagram of a structure of a signal equalization apparatus according to an embodiment of this application; and
FIG. 11 is a schematic diagram of a structure of an electronic device according to an embodiment of this application.

### DESCRIPTION OF EMBODIMENTS

To make objectives, technical solutions, and advantages of this application clearer, the following describes embodiments of this application with reference to accompanying drawings in embodiments of this application.

The terms "first", "second", and the like in the specification, claims, and accompanying drawings of this application are used to distinguish between different objects, but are not used to describe a specific sequence. In addition, the terms "include" and "have" and any variations thereof are intended to cover non-exclusive inclusion. For example, a process, method, system, product, or device that includes a series of steps or units is not limited to the listed steps or units, but optionally further includes an unlisted step or unit, or optionally further includes another inherent step or unit for the process, method, product, or device.

The "embodiment" mentioned in this specification means that specific features, structures, or characteristics described with reference to the embodiment may be included in at least one embodiment of this application. Appearance of the phrase at various locations in the specification does not necessarily refer to a same embodiment, or an independent or alternative embodiment mutually exclusive with another embodiment. A person skilled in the art may explicitly and implicitly understand that the embodiments described in this specification may be combined with other embodiments.

It should be understood that, in this application, "at least one (piece)" refers to one or more, "a plurality of" refers to two or more, "at least two (pieces)" refers to two, three, or more, and "and/or" is used to describe an association relationship of associated objects, and indicates that three relationships may exist. For example, "A and/or B" may indicate the following three cases: Only A exists, only B exists, and both A and B exist, where A and B may be singular or plural. The character "/" generally indicates an "or" relationship between associated objects. "At least one of the following items (pieces)" or a similar expression thereof refers to any combination of these items, including a single item (piece) or any combination of a plurality of items (pieces). For example, at least one of a, b, or c may represent a, b, c, "a and b", "a and c", "b and c", or "a, b, and c", where a, b, and c may be singular or plural.

This application provides a signal sending method and a signal equalization method. To describe the solutions of this application more clearly, the following first describes some knowledge related to signal sending and signal equalization.

Passive optical network (Passive Optical Network, PON): is a point-to-multipoint (Point-to-Multipoint, P2MP) optical transmission and access technology. A broadcast mode is used in downstream, and a time division multiple access mode is used in upstream. A topology such as a tree topology, a star topology, or a bus topology can be flexibly formed. Only a simple optical splitter needs to be installed at an optical branch point. Therefore, there are advantages such as optical cable resource saving, bandwidth resource sharing, equipment room investment reduction, a high network construction speed, and low overall network construction costs. A PON system is a pure medium network, avoids electromagnetic interference and lightning impact of an external device, reduces fault rates of a line and the external device, improves system reliability, reduces maintenance costs, and is a technology expected by a telecom maintenance department for a long time.

Three main parts in the PON system include an optical line terminal (Optical Line Terminal, OLT) at a central office end, a terminal optical network unit (Optical Network Unit, ONU), and an optical distribution network (Optical Distribution Network, ODN). "Passive" in the PON system means that no electronic device between the OLT and the ONU uses a power supply. Used components including an optical fiber, an optical splitter (Splitter), and the like are all passive components. Therefore, a network including these used components is referred to as a "passive optical network". In an architecture of the PON system, one OLT may have a plurality of PON units, each unit may form one independent PON network, and a plurality of different types of optical network terminals (Optical Network Terminal, ONT) are connected through inexpensive splitters and optical fibers in a distributed manner. An ONT may be understood as an ONU, but is a part of the ONU in the strict sense. A difference between the ONT and the ONU is that the ONT is an optical network terminal and is directly located at a user end, while the ONU is an optical network unit and there may be another network between the ONU and a user. For example, the ONU may be connected to a gateway device of an Ethernet access port, and then connected to an optical network terminal.

Optical line terminal (OLT): is a core component of an optical access network, is equivalent to a switch or a router in a conventional communication network, and is also a multi-service provisioning platform. The optical line terminal is usually disposed at a central office end, to provide a user-oriented optical interface of a passive optical network. Main functions implemented by the optical line terminal include: sending Ethernet data to an ONU in a broadcast mode; initiating and controlling a ranging process, and recording ranging information; and allocating bandwidth to the ONU, that is, controlling start time and a sending window size for the ONU to send data.

Optical network unit (ONU): is a device terminating an optical fiber in an optical access network, and provides a plurality of service interfaces for a user. The optical network unit is an optical interface on a network side, and is an electrical interface on a user side. Therefore, the optical network unit (ONU) needs to have an optical/electrical conversion function and an electrical/optical conversion function, and have a digital/analog conversion function and an analog/digital conversion function for a voice signal, a multiplexing function, a signaling processing function, and a maintenance and management function. Main functions implemented by the optical network unit include: selectively receiving broadcast data sent by an OLT; responding to ranging and power control commands sent by the OLT and performing corresponding adjustment; and buffering Ethernet data of a user, and sending the buffered data in an upstream direction in a sending window allocated by the OLT.

Inter-symbol interference (Inter-Symbol Interference, ISI): is also referred to as inter-symbol crosstalk. A square pulse has a sharp waveform in time domain, and therefore occupies infinite bandwidth in frequency domain. If the pulse passes through a low-pass filter, that is, a frequency of the pulse is narrowed, the pulse definitely becomes wide in time domain. Because a pulse is a sequence, adjacent pulses interfere with each other. This phenomenon is referred to as inter-symbol interference. A channel is always bandwidth-limited, and the bandwidth-limited channel extends a waveform of a pulse that passes through. When channel bandwidth is far greater than pulse bandwidth, the extension of the pulse is small. When channel bandwidth is close to signal bandwidth, the extension exceeds one symbol cycle, causing a signal pulse overlap, that is, inter-symbol interference. Inter-symbol interference is leading interference other than noise interference in a digital communication system. The inter-symbol interference is different from additive noise interference, and is a type of multiplicative interference. There are many causes for inter-symbol interference. Actually, as long as a band of a transmission channel is limited, inter-symbol interference is caused.

Signal equalization: Equalization means that an equalizer at a receiving end generates a characteristic opposite to that of a channel, to cancel inter-symbol interference caused by a time-varying multipath propagation characteristic of the channel. In a bandwidth-limited channel, inter-symbol interference caused by multipath impact may cause distortion of a transmitted signal, and consequently, a bit error occurs during reception. Inter-symbol interference is a main obstacle in transmission of high-speed data in a mobile wireless communication channel, and equalization is an effective method to deal with the inter-symbol interference. Due to randomness and a time-varying characteristic of a mobile fading channel, an equalizer needs to be capable of tracking a time-varying characteristic of a mobile communication channel in real time. Such an equalizer is referred to as an adaptive equalizer.

There may be two signal equalization methods. One method is frequency domain equalization, which makes a total transmission function of an entire system including an equalizer meet a condition of undistorted transmission. In the frequency domain equalization, an amplitude frequency characteristic and a group delay characteristic are usually corrected separately. Such a frequency domain equalization method is usually used for sequence equalization. The other method is time domain equalization. To be specific, a time response is directly considered, to make an impulse response of an entire system including an equalizer meet a condition of no inter-symbol crosstalk.

The adaptive equalizer has two working modes: a training mode and a tracking mode. In the training mode, a transmitter transmits a known fixed-length training sequence, so that an equalizer on a receiver can make a correct setting. The training sequence is usually a binary pseudo-random signal or a string of pre-specified data bits, followed by user data. The equalizer on the receiver evaluates a channel characteristic by using a recursive algorithm, and corrects a coefficient of a filter to compensate a channel. When the training sequence is designed, it is required that the equalizer can obtain a correct filtering coefficient through the sequence even under a worst channel condition. In this way, after the training sequence is received, a filtering coefficient of the equalizer is close to an optimal value. In the tracking mode, when user data is processed, an adaptive algorithm of the equalizer can track a channel that continuously changes. As a result, the adaptive equalizer continuously changes its filtering characteristic.

The following describes embodiments of this application with reference to the accompanying drawings in embodiments of this application.

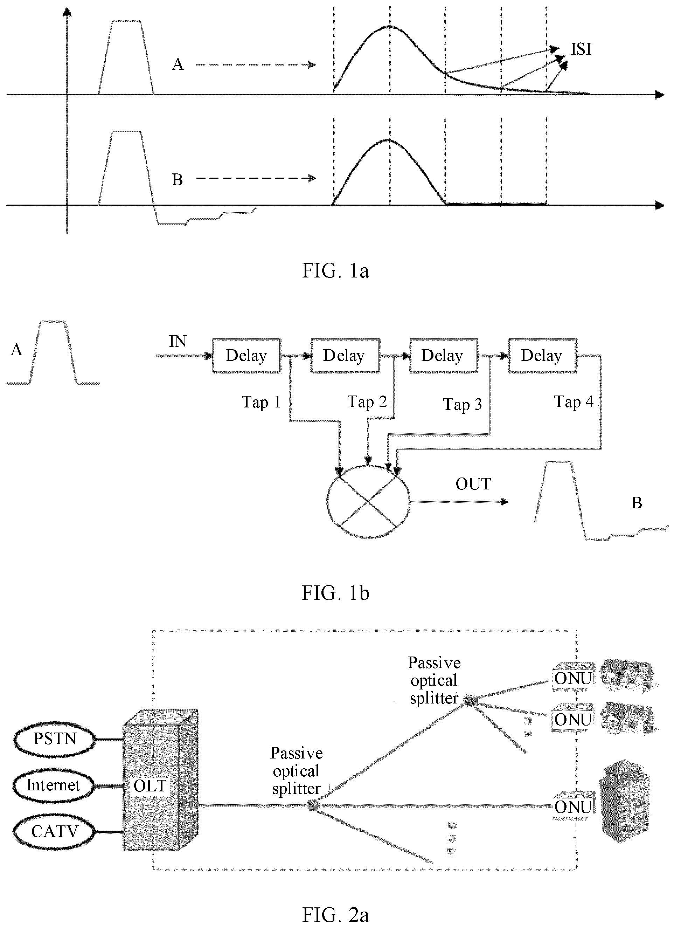

FIG. 1a is a schematic diagram of effect of inter-symbol interference according to an embodiment of this application. In a digital communication system, due to impact of transmission channel attenuation and the like, a signal encounters severe inter-symbol interference (ISI for short) at a receiving end, resulting in an increase in a bit error rate. As a signal transmission rate increases, an inter-symbol interference problem becomes more severe. To overcome the inter-symbol interference and improve transmission performance of the digital communication system, a signal equalization technology usually needs to be used at the signal receiving end. The signal equalization technology is a technology in which a receiver/transmitter equalizes a signal based on a transmission channel characteristic, that is, an equalizer of the receiver/transmitter generates a characteristic opposite to the transmission channel characteristic, to reduce or eliminate inter-symbol interference caused by a transmission channel propagation characteristic. As shown in FIG. 1a, a square wave signal A in the figure represents a signal sent by a transmitter. Due to impact of a transmission channel propagation characteristic, a tailing waveform is generated at a signal receiving end. As a result, three subsequent bit levels of the transmission signal are raised, that is, inter-symbol interference is caused on the three subsequent bit levels. If the to-be-sent square wave signal A is appropriately processed at a signal transmitting end based on an ISI amplitude of the square wave signal A that is caused by the transmission channel propagation characteristic, to make the square wave signal A have a negative tail (for example, a square wave signal B shown in FIG. 1a), an ISI amplitude of the square wave signal A at the receiving end that is caused by the transmission channel propagation characteristic can be canceled. This is a basic principle of signal equalization.

In digital communication engineering, a finite impulse response (Finite Impulse Response, FIR) digital filter is usually used to achieve signal equalization. The following uses the square wave signal A as an example to describe a process of obtaining the square wave signal B based on the square wave signal A.

FIG. 1b is a schematic diagram of effect of signal equalization according to an embodiment of this application. As shown in FIG. 1b, the square wave signal A is input into a FIR digital filter. The FIR digital filter includes a "delay-weight-summation" process. The input square wave signal A may be filtered by appropriately adjusting weighting coefficients of four taps (a tap 1, a tap 2, a tap 3, and a tap 4), to obtain a negative tailing waveform (that is, the square wave signal B), so as to cancel a positive tail of the square wave signal A that is caused by the transmission channel propagation characteristic, thereby eliminating an ISI phenomenon. The foregoing process of obtaining an equalization parameter (that is, a weighting coefficient of each tap in FIG. 1b) is referred to as equalization convergence.

FIG. 2a is a schematic diagram of an application scenario of a passive optical network according to an embodiment of this application. As shown in FIG. 2a, in a point-to-multipoint passive optical network PON system, one OLT and a plurality of ONUs communicate and interact with each other through several passive optical splitters, to implement internet access of the plurality of ONUs. This is a mainstream technology of current bandwidth access. A PON uses a time division multiplexing (Time-Division Multiplexing, TDM)/time division multiple access (Time Division Multiple Access, TDMA) technology to implement communication between one OLT and a plurality of ONUs. In downstream signal transmission, the OLT emits light for a long time, and the light is allocated to different ONUs in different slots. In this way, downstream multiplexing is implemented. In upstream signal transmission, the OLT specifies an ONU to emit light for communication in a specified slot, to implement upstream multiplexing. Therefore, in the PON system, in upstream, an optical signal of the ONU is sent in a burst, and the OLT receives the optical signal in a burst. That is, upstream signal transmission is a working mode of burst transmission.

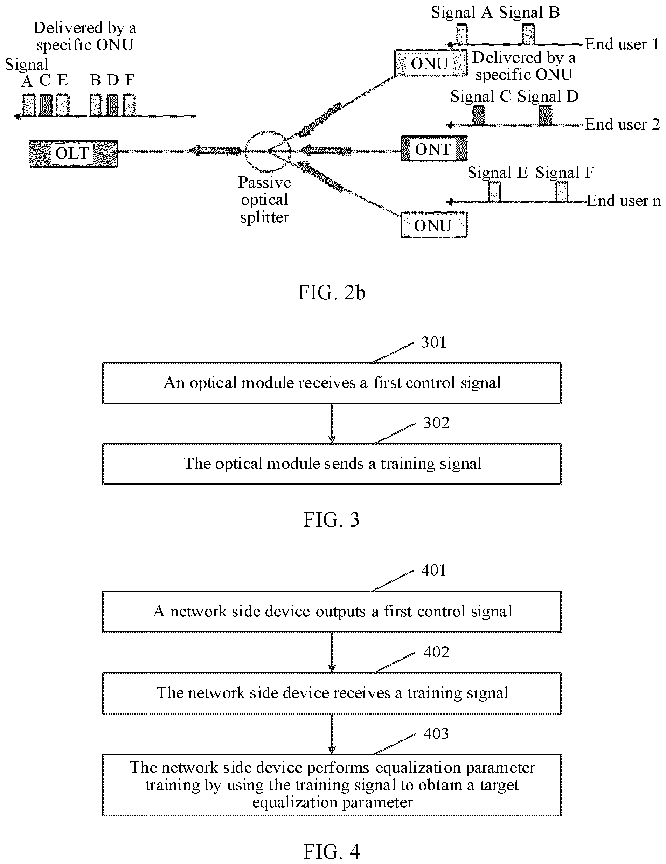

FIG. 2b is a schematic diagram of an application scenario of an upstream transmission signal according to an embodiment of this application. As shown in FIG. 2b, in a working mode of upstream signal transmission, there may be many ONU optical bursts with different powers and lengths in upstream. For example, an ONU of an end user 1, an ONT of an end user 2, and an ONU of an end user n jointly form one optical burst. One passive optical splitter buffers Ethernet data of the end users, and sends the buffered data in an upstream direction in a sending window allocated by an OLT. The buffered data is an upstream transmission signal delivered by a specific ONU. For example, upstream transmission signals delivered by the ONU of the end user 1 are a signal A and a signal B, upstream transmission signals delivered by the ONT of the end user 2 are a signal C and a signal D, and upstream transmission signals delivered by the ONU of the end user n are a signal E and a signal F.

With continuous evolution of a PON technology, the PON technology has been upgraded from GPON to 10G PON currently, and gradually evolves to 50G PON. As a transmission rate gradually increases, in a PON system, signal transmission between an optical module and an OLT board is increasingly affected by a transmission channel propagation characteristic, and there is an urgent requirement for channel equalization applicable to burst signal transmission in the PON system. At present, a person skilled in the art usually uses a fixed parameter method and an adaptive algorithm to search for a target equalization parameter, to perform channel equalization for burst signal transmission in the PON system.

In the fixed parameter method, a development engineer finds an optimal equalization parameter through research and development placement test in a device development process, and fixedly writes the optimal equalization parameter into a device, to implement equalization compensation. At present, most products with a rate of 10G or lower use this manner to perform channel equalization. However, in an application scenario of a pluggable optical module, a difference between parasitic parameters of different ports of the pluggable optical module and a difference between channel characteristics more obviously affect signal equalization as a transmission rate increases. If the fixed parameter method is still used, after an optical module of an OLT board is changed, the equalization parameter that is fixedly written into the device previously is not optimal, and a performance requirement for signal equalization cannot be met in a high-speed, such as a rate of 25G, transmission scenario.

In the adaptive algorithm, a transmitter sends a known fixed-length training packet, and a receiver receives the training packet and then performs equalization parameter training based on the training packet, to obtain an optimal target equalization parameter. Although this method is not subject to a consistency problem such as a difference between parasitic parameters of different ports and a difference between channel characteristics in an application scenario of a pluggable optical module, dynamic tracking for an equalization parameter training process requires a relatively long training packet for training. However, a PON is a P2MP system. The ONU can be controlled to send specified data in an upstream direction in a sending window allocated by the OLT only after a newly connected ONU performs windowing registration and establishes a communication relationship with an OLT. If the ONU does not perform windowing registration or establish a communication relationship with the OLT, a signal transmission conflict between different ONUs is caused, resulting in a communication failure. In a GPON system, during upstream windowing of the OLT, a packet length of the ONU does not exceed 125 µs (is usually less than 1 µs), and adaptive equalization for an approximately 10 ms continuous packet length required by dynamic tracking of an equalization parameter training process cannot be met, that is, an application scenario of burst transmission of an upstream signal in a high-speed PON system cannot be met.

For the problems existing in the fixed parameter method and the adaptive algorithm, embodiments of this application provide a signal sending method and a signal equalization method. After an optical module is powered on, a control signal is used to control the optical module to send a training signal before the optical module transmits an upstream control signal, and equalization parameter training is performed by using the training signal to obtain a target equalization parameter, so that the target equalization parameter is used for subsequent equalization for the upstream control signal. According to embodiments of this application, it is not subject to a consistency problem such as a difference between parasitic parameters of different ports and a difference between channel characteristics in an application scenario of a pluggable optical module, and adaptive equalization for a continuous packet length required by dynamic tracking of an equalization parameter training process can be further met, so that a dynamic equalization parameter training problem in an application scenario of burst transmission of an upstream signal in a high-speed PON system is resolved, and signal equalization efficiency is improved.

FIG. 3 is a schematic flowchart of a signal sending method according to an embodiment of this application. The method includes but is not limited to the following steps.

Step 301: An optical module receives a first control signal.

The optical module receives the first control signal sent by a network side device, and the first control signal indicates the optical module to send a training signal to the network side device. The optical module is connected to the network side device through an electrical signal link. The optical module is a pluggable optical module, and may perform electrical signal transmission with the network side device when being inserted into the network side device and powered on.

The optical module in this embodiment of this application is an optoelectronic component that performs optical-to-electrical conversion and electrical-to-optical conversion. A transmitting end of the optical module converts an electrical signal into an optical signal, and a receiving end of the optical module converts an optical signal into an electrical signal. The network side device in this embodiment of this application is a device equipped with a processor that can be configured to execute computer-executable instructions. The network side device may be a computer, a controller, or the like, and may be specifically an OLT device, such as an OLT board. The network side device provides a user-oriented optical interface of a passive optical network, and is configured to send Ethernet data to an ONU in a broadcast mode, and allocate bandwidth to the ONU, that is, control start time and a sending window size for the ONU to send data, to implement a point-to-multipoint optical transmission and access function of a PON system.

Step 302: The optical module sends the training signal.

After receiving the first control signal, the optical module sends the training signal to the network side device. The training signal is a signal to be used by the network side device to perform equalization parameter training.

The training signal may be a signal generated by an internal function module of the optical module based on a transmission channel propagation characteristic of the electrical signal link. After receiving the first control signal, the optical module sends the generated training signal to the network side device.

Alternatively, the training signal may be a signal output by the optical module when the optical module receives a digital signal. The training signal may be understood as a signal generated after the digital signal received by the optical module is transmitted through the electrical signal link and then encounters electrical excitation due to the transmission channel propagation characteristic of the electrical signal link. After receiving the digital signal and the first control signal, the optical module sends the training signal to the network side device. In this case, in step 301, in addition to receiving the first control signal, the optical module further needs to receive the digital signal sent by the network side device, to output the training signal.

The training signal obtained in this embodiment of this application carries the transmission channel propagation characteristic of the electrical signal link. Therefore, precision of a target equalization parameter subsequently obtained by performing equalization parameter training by using the training signal can be higher, so that signal equalization efficiency is improved. Further, the training signal obtained in this embodiment of this application is sent to the network side device, and is used by the network side device to perform equalization parameter training to obtain the target equalization parameter. In this way, after the pluggable optical module is inserted into the network side device and is powered on, equalization parameter training of the electrical signal link can be completed without depending on light emitting of an ONU. This resolves a dynamic equalization parameter training problem of a burst electrical signal link in a high-speed PON system, and improves equalization parameter training efficiency. In addition, a subsequent upstream transmission signal is equalized by using the target equalization parameter, so that signal equalization efficiency can be further improved.

In addition, the optical module further receives a second control signal sent by the network side device, and sends an upstream transmission signal to the network side device when an ONU signal is input. The second control signal is sent by the network side device to the optical module after equalization parameter training is completed, and indicates the optical module to send the upstream transmission signal to the network side device, so that the network side device may equalize, by using the target equalization parameter obtained through equalization parameter training, the upstream transmission signal sent by the optical module. In this embodiment of this application, the second control signal may be used to control a process in which the optical module sends the upstream transmission signal to the network side device and a process in which the optical module sends the training signal to the network side device to separately occur in different phases of signal transmission, so that an equalization parameter training process and a subsequent process of equalizing the upstream transmission signal do not interfere with each other, and equalization parameter training efficiency and signal equalization efficiency are improved.

In addition, this embodiment of this application further provides a structure implementation of a possible internal function module of the optical module. Because the foregoing signal sending method is applied to the optical module, the following further describes the foregoing signal sending method with reference to a structure of the internal function module of the optical module.

In a possible implementation, the optical module includes a sequence generator and a first multiplexer, and the sequence generator is coupled to the first multiplexer. After receiving the first control signal, the first multiplexer controls, by using the first control signal, the sequence generator to send a training signal generated by the sequence generator to the network side device. An externalization expression thereof is as follows: After receiving the first control signal, the optical module sends the training signal to the network side device. The first multiplexer may specifically select the sequence generator as an output signal source, to control the sequence generator. The first multiplexer selects the sequence generator as the output signal source, so that when the optical module is just inserted into the network side device and powered on, and no ONU signal is input, the training signal generated by the sequence generator can be transmitted to the network side device through the first multiplexer and the electrical signal link, and used by the network side device to perform equalization parameter training to obtain the target equalization parameter. According to the optical module in this embodiment of this application, the sequence generator is added internally, so that after the pluggable optical module is inserted into the network side device and powered on, equalization parameter training of the electrical signal link is completed without depending on light emitting of an ONU. This resolves a dynamic equalization parameter training problem of a burst electrical signal link in a high-speed PON system, and improves signal equalization efficiency.

In another possible implementation, the optical module includes a first multiplexer and a second multiplexer, and the first multiplexer is coupled to the second multiplexer. After receiving the first control signal, the first multiplexer controls, by using the first control signal, the second multiplexer to send the training signal to the network side device, where the training signal is a signal output by the first multiplexer when the second multiplexer receives a digital signal, and the digital signal is sent by the network side device to the second multiplexer. An externalization expression thereof is as follows: After receiving the first control signal and the digital signal, the optical module sends the training signal to the network side device. The first multiplexer may specifically select the second multiplexer as an output signal source, to control the second multiplexer. The first multiplexer selects the second multiplexer as the output signal source, so that when the optical module is just inserted into the network side device and powered on, and no ONU signal is input, the digital signal received by the second multiplexer can be transmitted to the network side device through the second multiplexer, the first multiplexer, and the electrical signal link, and used by the network side device to perform equalization parameter training to obtain the target equalization parameter. According to the optical module in this embodiment of this application, a sequence generator does not need to be added internally, but two multiplexers are used, so that after the pluggable optical module is inserted into the network side device and powered on, equalization parameter training of the electrical signal link is completed without depending on light emitting of an ONU. This resolves a dynamic equalization parameter training problem of a burst electrical signal link in a high-speed PON system, and improves signal equalization efficiency.

Further, based on the structure of the internal function module of the optical module provided in the foregoing possible implementation, the optical module further includes an amplifier, and the amplifier is coupled to the first multiplexer. After receiving the second control signal, the first multiplexer controls, by using the second control signal, the amplifier to send the upstream transmission signal to the network side device. An externalization expression thereof is as follows: After receiving the second control signal, the optical module sends the upstream transmission signal to the network side device. The first multiplexer may specifically select the amplifier as an output signal source, to control the amplifier. The first multiplexer selects the amplifier as the output signal source, so that after the network side device completes equalization parameter training, when an ONU signal is input, the upstream transmission signal input through the amplifier can be transmitted to the network side device through the first multiplexer and the electrical signal link, and the network side device equalizes the upstream transmission signal by using the target equalization parameter obtained through equalization parameter training. According to the optical module in this embodiment of this application, based on the structure of the foregoing function module, the amplifier is coupled to the first multiplexer, to control to separately send the training signal and the upstream transmission signal to the network side device in different phases, so that the network side device completes equalization parameter training of the electrical signal link without depending on light emitting of an ONU, and an equalization parameter training process and a subsequent process of equalizing the upstream transmission signal do not interfere with each other. This resolves a dynamic equalization parameter training problem of a burst electrical signal link in a high-speed PON system, and improves equalization parameter training efficiency and signal equalization efficiency.

FIG. 4 is a schematic flowchart of a signal equalization method according to an embodiment of this application. The method includes but is not limited to the following steps.

Step 401: A network side device outputs a first control signal.

When detecting that an optical module is inserted into the network side device and is powered on, the network side device outputs the first control signal. The first control signal indicates the optical module to send a training signal to the network side device. The network side device is connected to the optical module through an electrical signal link. The optical module is a pluggable optical module, and may perform electrical signal transmission with the network side device when being inserted into the network side device and powered on.

The network side device in this embodiment of this application is a device equipped with a processor that can be configured to execute computer-executable instructions. The network side device may be a computer, a controller, or the like, and may be specifically an OLT device, such as an OLT board. The network side device provides a user-oriented optical interface of a passive optical network, and is configured to send Ethernet data to an ONU in a broadcast mode, and allocate bandwidth to the ONU, that is, control start time and a sending window size for the ONU to send data, to implement a point-to-multipoint optical transmission and access function of a PON system. The optical module in this embodiment of this application is an optoelectronic component that performs optical-to-electrical conversion and electrical-to-optical conversion. A transmitting end of the optical module converts an electrical signal into an optical signal, and a receiving end of the optical module converts an optical signal into an electrical signal.

Step 402: The network side device receives the training signal.

After sending the first control signal, the network side device receives the training signal sent by the optical module. The training signal is a signal to be used by the network side device to perform equalization parameter training.

The training signal may be a signal generated by an internal function module of the optical module based on a transmission channel propagation characteristic of the electrical signal link. After receiving the first control signal, the optical module sends the generated training signal to the network side device.

Alternatively, the training signal may be a signal output by the optical module when the optical module receives a digital signal. The training signal may be understood as a signal generated after the digital signal received by the optical module is transmitted through the electrical signal link and then encounters electrical excitation due to the transmission channel propagation characteristic of the electrical signal link. After receiving the digital signal and the first control signal, the optical module sends the training signal to the network side device. In this case, in step 401, in addition to sending the first control signal, the network side device further needs to send the digital signal to the optical module, to obtain the training signal output by the optical module.

The training signal obtained in this embodiment of this application carries the transmission channel propagation characteristic of the electrical signal link. Therefore, precision of a target equalization parameter subsequently obtained by performing equalization parameter training by using the training signal can be higher, so that signal equalization efficiency is improved.

Step 403: The network side device performs equalization parameter training by using the training signal, to obtain a target equalization parameter.

After receiving the training signal, the network side device performs equalization parameter training by using the training signal, to obtain the target equalization parameter. The target equalization parameter is used to equalize a subsequently received upstream transmission signal.

According to this embodiment of this application, equalization parameter training of the electrical signal link can be completed without depending on light emitting of an ONU. This resolves a dynamic equalization parameter training problem of a burst electrical signal link in a high-speed PON system, and improves equalization parameter training efficiency. In addition, the subsequent upstream transmission signal is equalized by using the target equalization parameter, so that signal equalization efficiency can be further improved.

In addition, after completing equalization parameter training, the network side device further sends a second control signal to the optical module. The second control signal indicates the optical module to send an upstream transmission signal to the network side device when an ONU signal is input. After receiving the upstream transmission signal sent by the optical module, the network side device equalizes the upstream transmission signal by using the target equalization parameter obtained through equalization parameter training. In this embodiment of this application, the second control signal may be used to control a process in which the network side device receives the upstream transmission signal and a process in which the network side device receives the training signal to separately occur in different phases of signal transmission, so that an equalization parameter training process and a subsequent process of equalizing the upstream transmission signal do not interfere with each other, and equalization parameter training efficiency and signal equalization efficiency are improved.

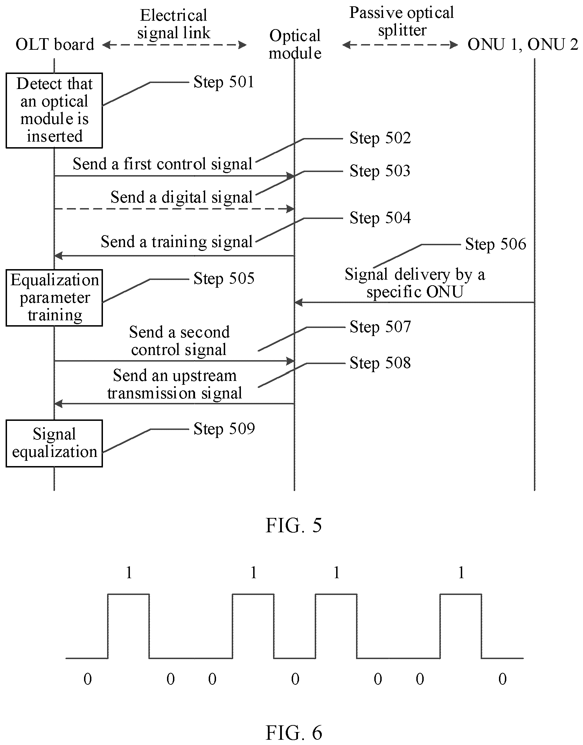

FIG. 5 is a schematic flowchart of signal exchange according to an embodiment of this application.

As shown in FIG. 5, one OLT board and a plurality of ONUs (an ONU 1, an ONU 2, and the like) communicate and interact with each other through several passive optical splitters, to implement internet access of the plurality of ONUs. Because the OLT board transmits an electrical signal and the ONU transmits an optical signal, an optical module for performing optical-to-electrical conversion and electrical-to-optical conversion is further required on an OLT board side. The OLT board is connected to the optical module through an electrical signal link. The optical module is a pluggable optical module, and may perform electrical signal transmission with the OLT board when being inserted into the OLT board and powered on. A transmitting end of the optical module converts an electrical signal into an optical signal, and a receiving end of the optical module converts an optical signal into an electrical signal, to implement communication interaction between the OLT board and the ONU.

When detecting that an optical module is inserted and powered on (referring to step 501), the OLT board sends a first control signal to the optical module (referring to step 502), where the first control signal indicates the optical module to send a training signal to the OLT board. After receiving the first control signal, the optical module sends the training signal to the OLT board (referring to step 504). The OLT board performs equalization parameter training by using the training signal, to obtain a target equalization parameter (referring to step 505). The target equalization parameter is used to equalize a subsequently input upstream transmission signal. The training signal sent by the optical module may be a signal generated by an internal function module of the optical module based on a transmission channel propagation characteristic of the electrical signal link. After receiving the first control signal, the optical module sends the generated training signal to the OLT board. Alternatively, the training signal may be a signal output by the optical module when the optical module receives a digital signal sent by the OLT board. The training signal may be understood as a signal generated after the digital signal received by the optical module is transmitted through the electrical signal link and then encounters electrical excitation due to the transmission channel propagation characteristic of the electrical signal link. After receiving the digital signal and the first control signal, the optical module sends the training signal to the OLT board. Therefore, in this case, in addition to sending the first control signal to the optical module, the OLT board further needs to send the digital signal to the optical module (referring to step 503).

The communication interaction between the OLT board and the optical module is completed shortly after the optical module is just inserted into the OLT board and powered on and no ONU signal is input. When the OLT board completes equalization parameter training and an ONU signal is input, that is, one or more ONUs perform signal delivery in this case (referring to step 506), the receiving end of the optical module converts an optical signal delivered by a specific ONU into an electrical signal, and after receiving a second control signal, sends the electrical signal (that is, an upstream transmission signal) to the OLT board (referring to step 508). The second control signal is a control signal sent by the OLT board to the optical module (referring to step 507), and indicates the optical module to send an upstream transmission signal to the OLT board, to equalize the upstream transmission signal by using the target equalization parameter obtained through equalization parameter training (referring to step 509).

In this embodiment of this application, according to a signal equalization method on the OLT board side and a signal sending method on an optical module side, the OLT board can complete equalization parameter training of the electrical signal link without depending on light emitting of an ONU, and an equalization parameter training process and a subsequent process of equalizing the upstream transmission signal do not interfere with each other. This resolves a dynamic equalization parameter training problem of a burst electrical signal link in a high-speed PON system, and improves equalization parameter training efficiency and signal equalization efficiency.

Specifically, for the digital signal in step 503, refer to FIG. 6. FIG. 6 is a schematic diagram of a waveform of a digital signal according to an embodiment of this application. As shown in FIG. 6, the digital signal described in this embodiment of this application is a square wave signal that alternately appears at a high level and a low level, and the digital signal may include a data segment or a data block. In the digital signal, "0" corresponds to the low level, and "1" corresponds to the high level. A segment of digital signal shown in FIG. 6 is used as an example for description. The digital signal is at the low level "0" in a first time period, is at the high level "1" in a second time period, is at the low level "0" in a third time period, is at the low level "0" in a fourth time period, and is at the high level "1" in a fifth time period. A sum of duration of the five time periods may be used as one cycle. The levels corresponding to the five time periods appear repeatedly in a next cycle, so that a same data segment or data block can be transmitted periodically. It should be noted that the high level and the low level in the digital signal do not correspond to two voltages with specific values, but correspond to two voltage ranges.

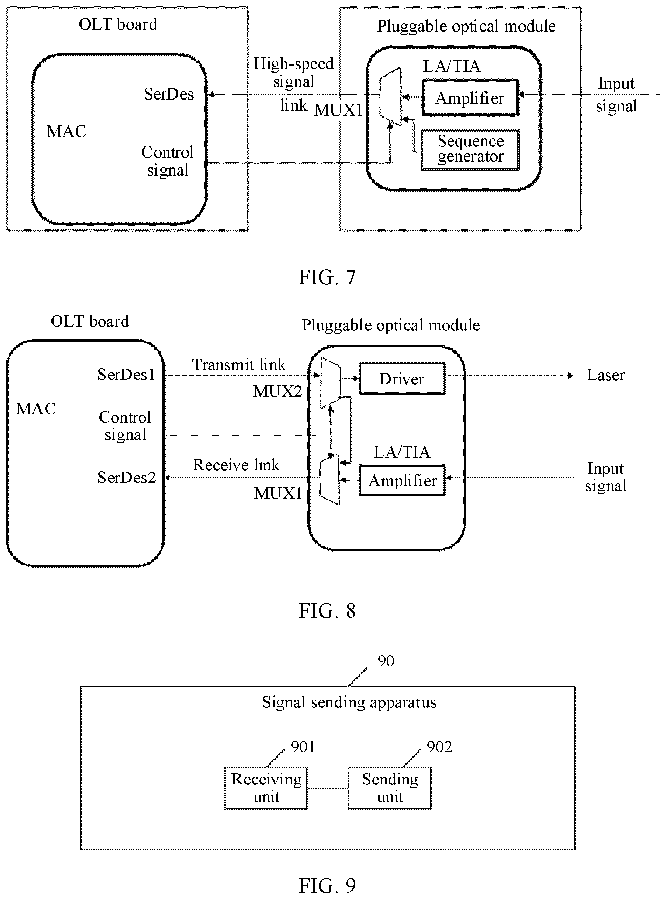

FIG. 7 is a schematic diagram of a structure of a signal processing system according to an embodiment of this application.

As shown in FIG. 7, the system includes an OLT board and a pluggable optical module, and the OLT board and the pluggable optical module are connected through an electrical signal link. Specifically, the OLT board includes a medium access control (Medium Access Control, MAC) chip and a serializing/deserializing circuitry (Serializing/Deserializing circuitry, SerDes) interface. The MAC chip is configured to control the OLT board to receive and send signals, and the SerDes interface is configured to transmit an electrical signal, to implement communication interaction with the pluggable optical module. The pluggable optical module includes a first multiplexer MUX1, a sequence generator, and an amplifier, the sequence generator is coupled to the first multiplexer MUX1, and the amplifier is coupled to the first multiplexer MUX1. The first multiplexer MUX1 selects the sequence generator or the amplifier as an output signal source, to control signal sending of the pluggable optical module.

In the signal processing system shown in FIG. 7, after detecting that the pluggable optical module is inserted into the OLT board and powered on, the MAC chip in the OLT board sends a first control signal to the pluggable optical module, to indicate the pluggable optical module to send a training signal to the OLT board. After receiving the first control signal, the first multiplexer MUX1 in the pluggable optical module selects the sequence generator as an output signal source, to control the sequence generator to generate the training signal based on a transmission channel propagation characteristic of the electrical signal link, and send the training signal to the OLT board through the first multiplexer MUX 1 and the SerDes interface. After receiving the training signal, the MAC chip in the OLT board performs equalization parameter training based on the training signal, to obtain a target equalization parameter. After completing the equalization parameter training, the MAC chip sends a second control signal to the pluggable optical module, to indicate the pluggable optical module to send an upstream transmission signal to the OLT board. After receiving the second control signal, the first multiplexer MUX1 in the pluggable optical module selects the amplifier as an output signal source, to control the upstream transmission signal received by the amplifier to be sent to the OLT board through the first multiplexer MUX1 and the SerDes interface. Specifically, the amplifier may be a limiting amplifier (Limiting Amplifier, LA) or a trans-impedance amplifier (Trans-Impedance Amplifier, TIA). After receiving the upstream transmission signal, the MAC chip equalizes the upstream transmission signal by using the target equalization parameter obtained through training.

FIG. 8 is a schematic diagram of a structure of another signal processing system according to an embodiment of this application.

As shown in FIG. 8, the system includes an OLT board and a pluggable optical module, and the OLT board and the pluggable optical module are connected through an electrical signal link. Specifically, the OLT board includes a MAC chip, a first interface SerDes1, and a second interface SerDes2. The MAC chip is configured to control the OLT board to receive and send signals, and the first interface SerDes1 and the second interface SerDes2 are configured to transmit an electrical signal, to implement communication interaction with the pluggable optical module. The pluggable optical module includes a first multiplexer MUX1, a second multiplexer MUX2, and an amplifier, the second multiplexer MUX2 is coupled to the first multiplexer MUX1, and the amplifier is coupled to the first multiplexer MUX1. The first multiplexer MUX1 selects the second multiplexer MUX2 or the amplifier as an output signal source, to control signal sending of the pluggable optical module.

In the signal processing system shown in FIG. 8, after detecting that the pluggable optical module is inserted into the OLT board and powered on, the MAC chip in the OLT board sends a first control signal to the pluggable optical module, to indicate the pluggable optical module to send a training signal to the OLT board. In addition, a digital signal is further sent to the pluggable optical module through the first interface SerDes1. After receiving the first control signal, the first multiplexer MUX1 in the pluggable optical module selects the second multiplexer MUX2 as an output signal source, to control the training signal output by the second multiplexer MUX2 in a case of receiving the digital signal to be sent to the OLT board through the first multiplexer MUX1 and the second interface SerDes2. After receiving the training signal, the MAC chip in the OLT board performs equalization parameter training based on the training signal, to obtain a target equalization parameter. After completing the equalization parameter training, the MAC chip sends a second control signal to the pluggable optical module, to indicate the pluggable optical module to send an upstream transmission signal to the OLT board. After receiving the second control signal, the first multiplexer MUX1 in the pluggable optical module selects the amplifier as an output signal source, to control the upstream transmission signal received by the amplifier to be sent to the OLT board through the first multiplexer MUX1 and the second interface SerDes2. Specifically, the amplifier may be an LA or a TIA. After receiving the upstream transmission signal, the MAC chip equalizes the upstream transmission signal by using the target equalization parameter obtained through training.

Specifically, in a baseband system, to suppress and eliminate impact of inter-symbol interference, an adjustable digital filter may be inserted to compensate phase-frequency and amplitude-frequency characteristics of the system. The foregoing process of correcting the phase-frequency and amplitude-frequency characteristics of the system is equalization, and the adjustable digital filter that implements equalization is referred to as an equalizer (as shown in FIG. 1b).

The equalizer mainly includes a group of tapped delay lines. Delay time between adjacent taps is a symbol width. An output of each tap is weighted by a variable gain amplifier and then output. Therefore, when an input is a distorted waveform, crosstalk caused by an output signal of an adder to another symbol waveform can be minimized. In theory, only an equalizer with an infinite length can completely correct the distorted waveform. In practice, a symbol waveform of a channel usually causes crosstalk to only a few adjacent symbols. A larger quantity of taps of an equalizer indicates better equalization effect. However, the larger quantity of taps indicates a more complex equalization implementation. Therefore, a quantity of taps needs to be determined based on an actual situation. Equalizers are classified into a linear equalizer and a non-linear equalizer in terms of structures. The linear equalizer is placed at a front end of a receiver to provide high-frequency distortion compensation for a channel. An advantage of the linear equalizer is that the linear equalizer is still effective even if an eye pattern is completely closed. A disadvantage is that the linear equalizer amplifies high-frequency noise. The non-linear equalizer requires an eye pattern opened to a specific extent, but does not amplify high-frequency noise. Currently, there are two most commonly used equalizers: a feed-forward equalizer (Feed-Forward Equalizer, FFE) and a decision feedback equalizer (Decision Feedback Equalizer, DFE). The FFE is a linear equalizer, and the DFE is a typical non-linear equalizer.

Both the foregoing equalization parameter training and signal equalization depend on an equalizer for implementation. The following uses implementation of equalization parameter training as an example for description.

In a process of performing equalization parameter training by using an equalizer, a zero forcing edge (Zero Forcing Edge, ZFE) algorithm needs to be used for training to obtain a target equalization parameter. The zero forcing edge algorithm searches for a specific data mode in a received training signal, and determines an equalization parameter adjustment direction based on a difference between ideal equalization effect and actual equalization effect. The zero forcing edge algorithm is a heuristic iterative algorithm with a high convergence speed.

In an ideal equalization condition, an edge of a training signal should exactly cross zero, and quantities of 0s and 1s in a decision result are basically the same, that is, a probability that the decision result is 0 is the same as a probability that the decision result is 1. Due to existence of inter-symbol interference, waveform superimposition between pulses causes a result that the edge cannot exactly cross zero, and a decision result at a receiving end may be 1 or 0. If over-equalization or under-equalization occurs, quantities of 0s and 1s in the decision result at the receiving end are unequal. The zero forcing edge algorithm determines the equalization parameter adjustment direction based on a data mode at the receiving end. In a case of a rising edge, if it is determined, based on the data mode, that compensation is insufficient, a gain of an equalizer needs to be increased. On the contrary, if it is determined, based on the data mode, that compensation is excessive, a gain of an equalizer needs to be decreased. The method of adjusting an equalization parameter by using the zero forcing edge algorithm is still applicable to a case of a falling edge.

During each time of iteration, the zero forcing edge algorithm needs only to implement an operation of increasing or decreasing an equalization coefficient by 1, and the implementation is simple. However, due to impact of various interference factors, an error signal fluctuates continuously. Therefore, it is generally impossible to determine the equalization parameter adjustment direction based on one error detection result. The equalization parameter tends to converge in a specific direction. Therefore, only when a specific quantity of data modes in a same adjustment direction are collected, the equalization parameter adjustment direction can be determined, that is, whether to increase or decrease the equalization coefficient by 1 can be determined. A convergence condition of the zero forcing edge algorithm is whether a probability that the edge decision result is 0 is the same as a probability that the edge decision result is 1. The zero forcing edge algorithm has a simple structure, consumes a small quantity of resources, and needs only to implement an operation of increasing or decreasing an equalization coefficient by 1. The zero forcing edge algorithm does not assume behavior of a transmitting end and a channel characteristic, and is generally applicable. The zero forcing edge algorithm can reduce mutual impact between a feed-forward equalizer and an adaptive algorithm of a decision feedback equalizer at a receiving end, and allow the receiving end to calculate an equalization parameter of the decision feedback equalizer after the feed-forward equalizer updates an equalization parameter.

The foregoing describes in detail the method in embodiments of this application. The following provides an apparatus in embodiments of this application.

FIG. 9 is a schematic diagram of a structure of a signal sending apparatus according to an embodiment of this application. The signal sending apparatus 90 is used in an optical module. The signal sending apparatus 90 may include a receiving unit 901 and a sending unit 902. The units are described as follows.

The receiving unit 901 is configured to receive a first control signal, where the first control signal indicates the signal sending apparatus to send a training signal to a network side device, and the signal sending apparatus is connected to the network side device through an electrical signal link.

The sending unit 902 is configured to send the training signal, where the training signal is a signal to be used by the network side device to perform equalization parameter training.

In this embodiment of this application, after receiving the first control signal, the signal sending apparatus sends the training signal to the network side device. The first control signal is sent by the network side device to the signal sending apparatus, and indicates the signal sending apparatus to send the training signal to the network side device, and the training signal is a signal to be used by the network side device to perform equalization parameter training. The signal sending apparatus is connected to the network side device through the electrical signal link. The signal sending apparatus is a pluggable signal sending apparatus, and may perform electrical signal transmission with the network side device when being inserted into the network side device and powered on.

Compared with that in a current method in which a fixed equalization parameter is written into a device, in this embodiment of this application, the first control signal is used to control the signal sending apparatus to send the training signal to the network side device after the signal sending apparatus is powered on and before the signal sending apparatus transmits the upstream control signal. The training signal is to be used by the network side device to perform equalization parameter training to obtain a target equalization parameter. Therefore, after the pluggable signal sending apparatus is inserted into the network side device and is powered on, equalization parameter training of the electrical signal link can be completed without depending on light emitting of an ONU. This resolves a dynamic equalization parameter training problem of a burst electrical signal link in a high-speed PON system, and improves signal equalization efficiency.

In a possible implementation, the training signal is a signal generated by the signal sending apparatus; or
the training signal is a signal output by the signal sending apparatus when the signal sending apparatus receives a digital signal, and the digital signal is sent by the network side device to the signal sending apparatus.

In this embodiment of this application, two different manners are provided for a source of the training signal sent by the signal sending apparatus. The training signal may be a signal generated by an internal function module of the signal sending apparatus based on a channel characteristic of the electrical signal link. After receiving the first control signal, the signal sending apparatus sends the generated training signal to the network side device. Alternatively, the training signal may be a signal output by the signal sending apparatus when the signal sending apparatus receives a digital signal. The training signal may be understood as a signal generated after the digital signal received by the signal sending apparatus is transmitted through the electrical signal link and then encounters electrical excitation due to the channel characteristic of the electrical signal link. After receiving the digital signal and the first control signal, the signal sending apparatus sends the training signal to the network side device. The training signal obtained in this embodiment of this application carries the channel characteristic of the electrical signal link. Therefore, precision of a target equalization parameter subsequently obtained by performing equalization parameter training by using the training signal can be higher, so that signal equalization efficiency is improved.

In a possible implementation, the receiving unit 901 is further configured to receive a second control signal, where the second control signal indicates the signal sending apparatus to send an upstream transmission signal to the network side device; and
the sending unit 902 is further configured to send the upstream transmission signal, where the upstream transmission signal is a signal equalized by using a target equalization parameter, and the target equalization parameter is obtained by performing equalization parameter training by using the training signal.

In this embodiment of this application, after receiving the second control signal, the signal sending apparatus sends the upstream transmission signal to the network side device. The second control signal is sent by the network side device to the signal sending apparatus when the network side device completes equalization parameter training, and indicates the signal sending apparatus to send the upstream transmission signal to the network side device. The upstream transmission signal is a signal equalized by the network side device by using the target equalization parameter, and the target equalization parameter is an equalization parameter obtained by the network side device by performing equalization parameter training by using the training signal sent by the signal sending apparatus. In this embodiment of this application, the second control signal is used to control the signal sending apparatus to send the upstream transmission signal to the network side device after the network side device completes equalization parameter training, so that the network side device can equalize the upstream transmission signal by using the target equalization parameter, to improve signal equalization efficiency.

In a possible implementation, the optical module includes a sequence generator and a first multiplexer, and the sequence generator is coupled to the first multiplexer;
the first multiplexer is configured to receive the first control signal transmitted by the receiving unit 901; and
the first multiplexer is further configured to control, by using the first control signal, the sequence generator to send the training signal to the sending unit 902, where the training signal is generated by the sequence generator.

In this embodiment of this application, a structure of a possible internal function module of the optical module is provided. The optical module includes the sequence generator and the first multiplexer, and the sequence generator is coupled to the first multiplexer. After receiving the first control signal transmitted by the receiving unit, the first multiplexer controls, by using the first control signal, the sequence generator to send the training signal generated by the sequence generator to the sending unit. An externalization expression thereof is as follows: After receiving the first control signal, the optical module sends the training signal to the network side device. The first multiplexer may specifically select the sequence generator as an output signal source, to control the sequence generator. The first multiplexer selects the sequence generator as the output signal source, so that when the optical module is just inserted into the network side device and powered on, and no ONU signal is input, the training signal generated by the sequence generator can be transmitted to the network side device through the first multiplexer and the electrical signal link, and used by the network side device to perform equalization parameter training to obtain the target equalization parameter. According to the structure of the internal function module of the optical module provided in this embodiment of this application, the sequence generator is added, so that after the pluggable optical module is inserted into the network side device and powered on, equalization parameter training of the electrical signal link is completed without depending on light emitting of an ONU. This resolves a dynamic equalization parameter training problem of a burst electrical signal link in a high-speed PON system, and improves signal equalization efficiency.

In a possible implementation, the optical module includes a first multiplexer and a second multiplexer, and the first multiplexer is coupled to the second multiplexer;
the first multiplexer is configured to receive the first control signal transmitted by the receiving unit 901; and
the first multiplexer is further configured to control, by using the first control signal, the second multiplexer to send the training signal to the sending unit 902, where the training signal is a signal output by the first multiplexer when the second multiplexer receives a digital signal, and the digital signal is transmitted by the receiving unit 901 to the second multiplexer.

In this embodiment of this application, a structure of another possible internal function module of the optical module is provided. The optical module includes the first multiplexer and the second multiplexer, and the first multiplexer is coupled to the second multiplexer. After receiving the first control signal transmitted by the receiving unit, the first multiplexer controls, by using the first control signal, the second multiplexer to send the training signal to the sending unit, where the training signal is a signal output by the first multiplexer when the second multiplexer receives the digital signal, and the digital signal is transmitted by the receiving unit to the second multiplexer. An externalization expression thereof is as follows: After receiving the first control signal and the digital signal, the optical module sends the training signal to the network side device. The first multiplexer may specifically select the second multiplexer as an output signal source, to control the second multiplexer. The first multiplexer selects the second multiplexer as the output signal source, so that when the optical module is just inserted into the network side device and powered on, and no ONU signal is input, the digital signal received by the second multiplexer can be transmitted to the network side device through the second multiplexer, the first multiplexer, and the electrical signal link, and used by the network side device to perform equalization parameter training to obtain the target equalization parameter. According to the structure of the internal function module of the optical module provided in this embodiment of this application, a sequence generator does not need to be added, but two multiplexers are used, so that after the pluggable optical module is inserted into the network side device and powered on, equalization parameter training of the electrical signal link is completed without depending on light emitting of an ONU. This resolves a dynamic equalization parameter training problem of a burst electrical signal link in a high-speed PON system, and improves signal equalization efficiency.

In a possible implementation, the optical module further includes an amplifier, and the amplifier is coupled to the first multiplexer;
the first multiplexer is further configured to receive the second control signal; and
the first multiplexer is further configured to control, by using the second control signal, the amplifier to send the upstream transmission signal to the sending unit 902.

In this embodiment of this application, a structure of another possible internal function module of the optical module is provided. The optical module further includes the amplifier in addition to including the sequence generator and the first multiplexer or including the first multiplexer and the second multiplexer. The amplifier is coupled to the first multiplexer. After receiving the second control signal, the first multiplexer controls, by using the second control signal, the amplifier to send the upstream transmission signal to the sending unit. An externalization expression thereof is as follows: After receiving the second control signal, the optical module sends the upstream transmission signal to the network side device. The first multiplexer may specifically select the amplifier as an output signal source, to control the amplifier. The first multiplexer selects the amplifier as the output signal source, so that after the network side device completes equalization parameter training, when an ONU signal is input, the upstream transmission signal input through the amplifier can be transmitted to the network side device through the first multiplexer and the electrical signal link, and the network side device equalizes the upstream transmission signal by using the target equalization parameter obtained through equalization parameter training. According to the structure of the internal function module of the optical module provided in this embodiment of this application, based on the structure of the foregoing module, the amplifier is coupled to the first multiplexer, to control to separately send the training signal and the upstream transmission signal to the network side device in different phases, so that the network side device completes equalization parameter training of the electrical signal link without depending on light emitting of an ONU, and an equalization parameter training process and a subsequent process of equalizing the upstream transmission signal do not interfere with each other. This resolves a dynamic equalization parameter training problem of a burst electrical signal link in a high-speed PON system, and improves signal equalization efficiency.

According to this embodiment of this application, the units in the apparatus shown in FIG. 9 may be separately or all combined into one or more other units, or one or more units in the apparatus may be further split into a plurality of units with more detailed functions. This can implement a same operation without affecting implementation of technical effects of this embodiment of this application. The foregoing units are obtained through division based on logical functions. In actual application, a function of one unit may be implemented by a plurality of units, or functions of a plurality of units are implemented by one unit. In another embodiment of this application, a network device may alternatively include another unit. In actual application, the functions may be implemented with assistance of the another unit, and may be implemented by a plurality of units in collaboration.

It should be noted that, for implementation of each unit, refer to corresponding descriptions in the method embodiments shown in FIG. 3 and FIG. 5.

In the signal sending apparatus 90 described in FIG. 9, the first control signal is used to control the signal sending apparatus to send the training signal to the network side device after the signal sending apparatus is powered on and before the signal sending apparatus transmits the upstream control signal. The training signal is to be used by the network side device to perform equalization parameter training to obtain a target equalization parameter. Therefore, after the pluggable signal sending apparatus is inserted into the network side device and is powered on, equalization parameter training of the electrical signal link can be completed without depending on light emitting of an ONU. This resolves a dynamic equalization parameter training problem of a burst electrical signal link in a high-speed PON system, and improves signal equalization efficiency.

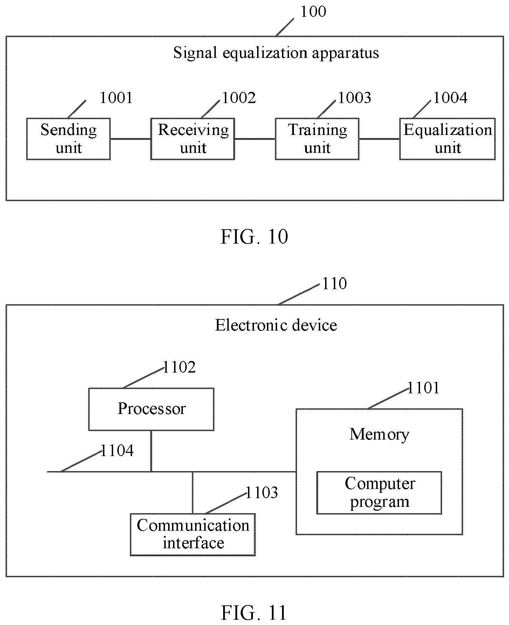

FIG. 10 is a schematic diagram of a structure of a signal equalization apparatus according to an embodiment of this application. The signal equalization apparatus 100 may include a sending unit 1001, a receiving unit 1002, and a training unit 1003. The units are described as follows.

The sending unit 1001 is configured to output a first control signal, where the first control signal indicates an optical module to send a training signal to the signal equalization apparatus, and the signal equalization apparatus is connected to the optical module through an electrical signal link.

The receiving unit 1002 is configured to receive the training signal.

The training unit 1003 is configured to perform equalization parameter training by using the training signal, to obtain a target equalization parameter, where the target equalization parameter is used to equalize an upstream transmission signal.

In this embodiment of this application, after sending the first control signal to the optical module, the signal equalization apparatus receives the training signal sent by the optical module, and then performs equalization parameter training by using the received training signal, to obtain the target equalization parameter. The first control signal indicates the optical module to send the training signal to the signal equalization apparatus, and the target equalization parameter is used to equalize the subsequently received upstream transmission signal. The signal equalization apparatus is connected to the optical module through the electrical signal link. The optical module is a pluggable optical module, and may perform electrical signal transmission with the signal equalization apparatus when being inserted into the signal equalization apparatus and powered on.

Compared with that in a current method in which a fixed equalization parameter is written into a device, in this embodiment of this application, the first control signal is used to control the optical module to send the training signal to the signal equalization apparatus after the optical module is powered on and before the optical module transmits the upstream control signal. Then, the signal equalization apparatus performs equalization parameter training by using the training signal, to obtain the target equalization parameter. Therefore, after the pluggable optical module is inserted into the signal equalization apparatus and is powered on, equalization parameter training of the electrical signal link is completed without depending on light emitting of an ONU, and an equalization parameter training process and a subsequent process of equalizing the upstream transmission signal do not interfere with each other. This resolves a dynamic equalization parameter training problem of a burst electrical signal link in a high-speed PON system, and improves equalization parameter training efficiency and signal equalization efficiency.

In a possible implementation, the training signal is a signal generated by the optical module.

In this embodiment of this application, a possible manner is provided for a source of the training signal sent by the optical module. The training signal may be a signal generated by an internal function module of the optical module based on a channel characteristic of the electrical signal link between the optical module and the signal equalization apparatus. After receiving the first control signal sent by the signal equalization apparatus, the optical module sends the generated training signal to the signal equalization apparatus. The training signal obtained in this embodiment of this application carries the channel characteristic of the electrical signal link between the signal equalization apparatus and the optical module. Therefore, precision of a target equalization parameter subsequently obtained by performing equalization parameter training by using the training signal can be higher, so that signal equalization efficiency is improved.

In a possible implementation, the training signal is a signal output by the optical module when the optical module receives a digital signal, and the digital signal is sent by the signal equalization apparatus to the optical module.

In this embodiment of this application, another possible manner is provided for a source of the training signal sent by the optical module. Alternatively, the training signal may be a signal output by the optical module when the optical module receives the digital signal sent by the signal equalization apparatus. The training signal may be understood as a signal generated after the digital signal received by the optical module is transmitted through the electrical signal link and then encounters electrical excitation due to the channel characteristic of the electrical signal link. After receiving the digital signal and the first control signal, the optical module sends the training signal to the signal equalization apparatus. The training signal obtained in this embodiment of this application carries the channel characteristic of the electrical signal link between the signal equalization apparatus and the optical module. Therefore, precision of a target equalization parameter subsequently obtained by performing equalization parameter training by using the training signal can be higher, so that signal equalization efficiency is improved.

In a possible implementation, the sending unit 1001 is specifically configured to output the first control signal when it is detected that the optical module is inserted into the signal equalization apparatus and is powered on.

In this embodiment of this application, when detecting that the optical module is inserted into the signal equalization apparatus and is powered on, the signal equalization apparatus outputs the first control signal, to control the optical module to send the training signal to the signal equalization apparatus, to perform equalization parameter training. In this embodiment of this application, a control signal is sent to the optical module for control by detecting an insertion status and a power-on status of the optical module, so that the training signal can be obtained when no ONU signal is input, to complete equalization parameter training. This improves equalization parameter training efficiency and improves signal equalization efficiency.

In a possible implementation, the apparatus further includes:
the sending unit 1001, further configured to output a second control signal, where the second control signal indicates the optical module to send the upstream transmission signal to the signal equalization apparatus;
the receiving unit 1002, further configured to receive the upstream transmission signal; and
an equalization unit 1004, configured to equalize the upstream transmission signal by using the target equalization parameter.

In this embodiment of this application, when completing equalization parameter training, the signal equalization apparatus sends the second control signal to the optical module, to indicate the optical module to send the upstream transmission signal to the signal equalization apparatus. After receiving the upstream transmission signal, the signal equalization apparatus performs signal equalization on the upstream transmission signal by using the target equalization parameter obtained through equalization parameter training. In this embodiment of this application, the second control signal is used to control the optical module to send the upstream transmission signal to the signal equalization apparatus after the signal equalization apparatus completes equalization parameter training, so that the signal equalization apparatus can equalize the upstream transmission signal by using the target equalization parameter. In addition, because the optical module is controlled to separately send the training signal and the upstream transmission signal to the signal equalization apparatus in different phases, effect that a process in which the signal equalization apparatus equalizes the upstream transmission signal and the foregoing equalization parameter training process do not interfere with each other can be achieved. This resolves a dynamic equalization parameter training problem of a burst electrical signal link in a high-speed PON system, and improves equalization parameter training efficiency and signal equalization efficiency.

According to this embodiment of this application, the units in the apparatus shown in FIG. 10 may be separately or all combined into one or more other units, or one or more units in the apparatus may be further split into a plurality of units with more detailed functions. This can implement a same operation without affecting implementation of technical effects of this embodiment of this application. The foregoing units are obtained through division based on logical functions. In actual application, a function of one unit may be implemented by a plurality of units, or functions of a plurality of units are implemented by one unit. In another embodiment of this application, a network device may alternatively include another unit. In actual application, the functions may be implemented with assistance of the another unit, and may be implemented by a plurality of units in collaboration.

It should be noted that, for implementation of each unit, refer to corresponding descriptions in the method embodiments shown in FIG. 4 and FIG. 5.

In the signal equalization apparatus 100 described in FIG. 10, the first control signal is used to control the optical module to send the training signal to the signal equalization apparatus after the optical module is powered on and before the optical module transmits the upstream control signal. Then, the signal equalization apparatus performs equalization parameter training by using the training signal, to obtain the target equalization parameter. Therefore, after the pluggable optical module is inserted into the signal equalization apparatus and is powered on, equalization parameter training of the electrical signal link is completed without depending on light emitting of an ONU, and an equalization parameter training process and a subsequent process of equalizing the upstream transmission signal do not interfere with each other. This resolves a dynamic equalization parameter training problem of a burst electrical signal link in a high-speed PON system, and improves equalization parameter training efficiency and signal equalization efficiency.

FIG. 11 is a schematic diagram of a structure of an electronic device 110 according to an embodiment of this application. The electronic device 110 may include a memory 1101 and a processor 1102. Further, optionally, a communication interface 1103 and a bus 1104 may be included. The memory 1101, the processor 1102, and the communication interface 1103 are communicatively connected to each other by using the bus 1104. The communication interface 1103 is configured to exchange data with the signal sending apparatus 90 or the signal equalization apparatus 100.

The memory 1101 is configured to provide storage space, and the storage space may store data such as an operating system and a computer program. The memory 1101 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM).

The processor 1102 is a module that performs an arithmetic operation and a logical operation, and may be one or a combination of processing modules such as a central processing unit (central processing unit, CPU), a graphics processing unit (graphics processing unit, GPU), or a microprocessor unit (microprocessor unit, MPU).

The memory 1101 stores a computer program, and the processor 1102 invokes the computer program stored in the memory 1101, to perform the signal sending methods shown in FIG. 3 and FIG. 5.

An optical module receives a first control signal, where the first control signal indicates the optical module to send a training signal to a network side device, and the optical module is connected to the network side device through an electrical signal link.

The optical module sends the training signal, where the training signal is a signal to be used by the network side device to perform equalization parameter training.

In this embodiment of this application, after receiving the first control signal, the optical module sends the training signal to the network side device. The first control signal is sent by the network side device to the optical module, and indicates the optical module to send the training signal to the network side device, and the training signal is a signal to be used by the network side device to perform equalization parameter training. The optical module is connected to the network side device through the electrical signal link. The optical module is a pluggable optical module, and may perform electrical signal transmission with the network side device when being inserted into the network side device and powered on.

Compared with that in a current method in which a fixed equalization parameter is written into a device, in this embodiment of this application, the first control signal is used to control the optical module to send the training signal to the network side device after the optical module is powered on and before the optical module transmits the upstream control signal. The training signal is to be used by the network side device to perform equalization parameter training to obtain a target equalization parameter. Therefore, after the pluggable optical module is inserted into the network side device and is powered on, equalization parameter training of the electrical signal link can be completed without depending on light emitting of an optical network unit (Optical Network Unit, ONU). This resolves a dynamic equalization parameter training problem of a burst electrical signal link in a high-speed passive optical network (Passive Optical Network, PON) system, and improves signal equalization efficiency.

In a possible implementation, the training signal is a signal generated by the optical module; or
the training signal is a signal output by the optical module when the optical module receives a digital signal, and the digital signal is sent by the network side device to the optical module.

In this embodiment of this application, two different manners are provided for a source of the training signal sent by the optical module. The training signal may be a signal generated by an internal function module of the optical module based on a channel characteristic of the electrical signal link. After receiving the first control signal, the optical module sends the generated training signal to the network side device. Alternatively, the training signal may be a signal output by the optical module when the optical module receives a digital signal. The training signal may be understood as a signal generated after the digital signal received by the optical module is transmitted through the electrical signal link and then encounters electrical excitation due to the channel characteristic of the electrical signal link. After receiving the digital signal and the first control signal, the optical module sends the training signal to the network side device. The training signal obtained in this embodiment of this application carries the channel characteristic of the electrical signal link. Therefore, precision of a target equalization parameter subsequently obtained by performing equalization parameter training by using the training signal can be higher, so that signal equalization efficiency is improved.

In a possible implementation, the processor 1102 is further configured to:
receive a second control signal, where the second control signal indicates the optical module to send an upstream transmission signal to the network side device; and
send the upstream transmission signal, where the upstream transmission signal is a signal equalized by using a target equalization parameter, and the target equalization parameter is obtained by performing equalization parameter training by using the training signal.

In this embodiment of this application, after receiving the second control signal, the optical module sends the upstream transmission signal to the network side device. The second control signal is sent by the network side device to the optical module when the network side device completes equalization parameter training, and indicates the optical module to send the upstream transmission signal to the network side device. The upstream transmission signal is a signal equalized by the network side device by using the target equalization parameter, and the target equalization parameter is an equalization parameter obtained by the network side device by performing equalization parameter training by using the training signal sent by the optical module. In this embodiment of this application, the second control signal is used to control the optical module to send the upstream transmission signal to the network side device after the network side device completes equalization parameter training, so that the network side device can equalize the upstream transmission signal by using the target equalization parameter, to improve signal equalization efficiency.

In a possible implementation, the optical module includes a sequence generator and a first multiplexer, and the sequence generator is coupled to the first multiplexer;
the first multiplexer receives the first control signal; and
the first multiplexer controls, by using the first control signal, the sequence generator to send the training signal to the network side device, where the training signal is generated by the sequence generator.

In this embodiment of this application, a structure of a possible internal function module of the optical module is provided. The optical module includes the sequence generator and the first multiplexer, and the sequence generator is coupled to the first multiplexer. After receiving the first control signal, the first multiplexer controls, by using the first control signal, the sequence generator to send the training signal generated by the sequence generator to the network side device. An externalization expression thereof is as follows: After receiving the first control signal, the optical module sends the training signal to the network side device. The first multiplexer may specifically select the sequence generator as an output signal source, to control the sequence generator. The first multiplexer selects the sequence generator as the output signal source, so that when the optical module is just inserted into the network side device and powered on, and no ONU signal is input, the training signal generated by the sequence generator can be transmitted to the network side device through the first multiplexer and the electrical signal link, and used by the network side device to perform equalization parameter training to obtain the target equalization parameter. According to the structure of the internal function module of the optical module provided in this embodiment of this application, the sequence generator is added, so that after the pluggable optical module is inserted into the network side device and powered on, equalization parameter training of the electrical signal link is completed without depending on light emitting of an ONU. This resolves a dynamic equalization parameter training problem of a burst electrical signal link in a high-speed PON system, and improves signal equalization efficiency.

In a possible implementation, the optical module includes a first multiplexer and a second multiplexer, and the first multiplexer is coupled to the second multiplexer;
the first multiplexer receives the first control signal; and
the first multiplexer controls, by using the first control signal, the second multiplexer to send the training signal to the network side device, where the training signal is a signal output by the first multiplexer when the second multiplexer receives a digital signal, and the digital signal is sent by the network side device to the second multiplexer.

In this embodiment of this application, a structure of another possible internal function module of the optical module is provided. The optical module includes the first multiplexer and the second multiplexer, and the first multiplexer is coupled to the second multiplexer. After receiving the first control signal, the first multiplexer controls, by using the first control signal, the second multiplexer to send the training signal to the network side device, where the training signal is a signal output by the first multiplexer when the second multiplexer receives the digital signal, and the digital signal is sent by the network side device to the second multiplexer. An externalization expression thereof is as follows: After receiving the first control signal and the digital signal, the optical module sends the training signal to the network side device. The first multiplexer may specifically select the second multiplexer as an output signal source, to control the second multiplexer. The first multiplexer selects the second multiplexer as the output signal source, so that when the optical module is just inserted into the network side device and powered on, and no ONU signal is input, the digital signal received by the second multiplexer can be transmitted to the network side device through the second multiplexer, the first multiplexer, and the electrical signal link, and used by the network side device to perform equalization parameter training to obtain the target equalization parameter. According to the structure of the internal function module of the optical module provided in this embodiment of this application, a sequence generator does not need to be added, but two multiplexers are used, so that after the pluggable optical module is inserted into the network side device and powered on, equalization parameter training of the electrical signal link is completed without depending on light emitting of an ONU. This resolves a dynamic equalization parameter training problem of a burst electrical signal link in a high-speed PON system, and improves signal equalization efficiency.

In a possible implementation, the optical module further includes an amplifier, and the amplifier is coupled to the first multiplexer;
the first multiplexer receives the second control signal; and
the first multiplexer controls, by using the second control signal, the amplifier to send the upstream transmission signal to the network side device.

In this embodiment of this application, a structure of another possible internal function module of the optical module is provided. The optical module further includes the amplifier in addition to including the sequence generator and the first multiplexer or including the first multiplexer and the second multiplexer. The amplifier is coupled to the first multiplexer. After receiving the second control signal, the first multiplexer controls, by using the second control signal, the amplifier to send the upstream transmission signal to the network side device. An externalization expression thereof is as follows: After receiving the second control signal, the optical module sends the upstream transmission signal to the network side device. The first multiplexer may specifically select the amplifier as an output signal source, to control the amplifier. The first multiplexer selects the amplifier as the output signal source, so that after the network side device completes equalization parameter training, when an ONU signal is input, the upstream transmission signal input through the amplifier can be transmitted to the network side device through the first multiplexer and the electrical signal link, and the network side device equalizes the upstream transmission signal by using the target equalization parameter obtained through equalization parameter training. According to the structure of the internal function module of the optical module provided in this embodiment of this application, based on the structure of the foregoing module, the amplifier is coupled to the first multiplexer, to control to separately send the training signal and the upstream transmission signal to the network side device in different phases, so that the network side device completes equalization parameter training of the electrical signal link without depending on light emitting of an ONU, and an equalization parameter training process and a subsequent process of equalizing the upstream transmission signal do not interfere with each other. This resolves a dynamic equalization parameter training problem of a burst electrical signal link in a high-speed PON system, and improves signal equalization efficiency.

In this embodiment of this application, the electronic device 110 is the foregoing optical module.

For specific content and corresponding beneficial effects of the method performed by the processor 1102, refer to FIG. 3 and FIG. 5. Details are not described herein again.

The memory 1101 stores a computer program, and the processor 1102 invokes the computer program stored in the memory 1101, to perform the signal equalization methods shown in FIG. 4 and FIG. 5.

A network side device outputs a first control signal, where the first control signal indicates an optical module to send a training signal to the network side device, and the network side device is connected to the optical module through an electrical signal link.

The network side device receives the training signal.

The network side device performs equalization parameter training by using the training signal, to obtain a target equalization parameter, where the target equalization parameter is used to equalize an upstream transmission signal.

In this embodiment of this application, after sending the first control signal to the optical module, the network side device receives the training signal sent by the optical module, and then performs equalization parameter training by using the received training signal, to obtain the target equalization parameter. The first control signal indicates the optical module to send the training signal to the network side device, and the target equalization parameter is used to equalize the subsequently received upstream transmission signal. The network side device is connected to the optical module through the electrical signal link. The optical module is a pluggable optical module, and may perform electrical signal transmission with the network side device when being inserted into the network side device and powered on.

Compared with that in a current method in which a fixed equalization parameter is written into a device, in this embodiment of this application, the first control signal is used to control the optical module to send the training signal to the network side device after the optical module is powered on and before the optical module transmits the upstream control signal. Then, the network side device performs equalization parameter training by using the training signal, to obtain the target equalization parameter. Therefore, after the pluggable optical module is inserted into the network side device and is powered on, equalization parameter training of the electrical signal link is completed without depending on light emitting of an ONU, and an equalization parameter training process and a subsequent process of equalizing the upstream transmission signal do not interfere with each other. This resolves a dynamic equalization parameter training problem of a burst electrical signal link in a high-speed PON system, and improves equalization parameter training efficiency and signal equalization efficiency.

In a possible implementation, the training signal is a signal generated by the optical module.

In this embodiment of this application, a possible manner is provided for a source of the training signal sent by the optical module. The training signal may be a signal generated by an internal function module of the optical module based on a channel characteristic of the electrical signal link between the optical module and the network side device. After receiving the first control signal sent by the network side device, the optical module sends the generated training signal to the network side device. The training signal obtained in this embodiment of this application carries the channel characteristic of the electrical signal link between the network side device and the optical module. Therefore, precision of a target equalization parameter subsequently obtained by performing equalization parameter training by using the training signal can be higher, so that signal equalization efficiency is improved.

In a possible implementation, the training signal is a signal output by the optical module when the optical module receives a digital signal, and the digital signal is sent by the network side device to the optical module.

In this embodiment of this application, another possible manner is provided for a source of the training signal sent by the optical module. Alternatively, the training signal may be a signal output by the optical module when the optical module receives the digital signal sent by the network side device. The training signal may be understood as a signal generated after the digital signal received by the optical module is transmitted through the electrical signal link and then encounters electrical excitation due to the channel characteristic of the electrical signal link. After receiving the digital signal and the first control signal, the optical module sends the training signal to the network side device. The training signal obtained in this embodiment of this application carries the channel characteristic of the electrical signal link between the network side device and the optical module. Therefore, precision of a target equalization parameter subsequently obtained by performing equalization parameter training by using the training signal can be higher, so that signal equalization efficiency is improved.

In a possible implementation, the processor 1102 is specifically configured to:
output the first control signal when detecting that the optical module is inserted into the network side device and is powered on.

In this embodiment of this application, when detecting that the optical module is inserted into the network side device and is powered on, the network side device outputs the first control signal, to control the optical module to send the training signal to the network side device, to perform equalization parameter training. In this embodiment of this application, a control signal is sent to the optical module for control by detecting an insertion status and a power-on status of the optical module, so that the training signal can be obtained when no ONU signal is input, to complete equalization parameter training. This improves equalization parameter training efficiency and improves signal equalization efficiency.

In a possible implementation, the processor 1102 is further configured to:
output a second control signal, where the second control signal indicates the optical module to send the upstream transmission signal to the network side device;
receive the upstream transmission signal; and
equalize the upstream transmission signal by using the target equalization parameter.

In this embodiment of this application, when completing equalization parameter training, the network side device sends the second control signal to the optical module, to indicate the optical module to send the upstream transmission signal to the network side device. After receiving the upstream transmission signal, the network side device performs signal equalization on the upstream transmission signal by using the target equalization parameter obtained through equalization parameter training. In this embodiment of this application, the second control signal is used to control the optical module to send the upstream transmission signal to the network side device after the network side device completes equalization parameter training, so that the network side device can equalize the upstream transmission signal by using the target equalization parameter. In addition, because the optical module is controlled to separately send the training signal and the upstream transmission signal to the network side device in different phases, effect that a process in which the network side device equalizes the upstream transmission signal and the foregoing equalization parameter training process do not interfere with each other can be achieved. This resolves a dynamic equalization parameter training problem of a burst electrical signal link in a high-speed PON system, and improves equalization parameter training efficiency and signal equalization efficiency.

In this embodiment of this application, the electronic device 110 is the foregoing network side device.

For specific content and corresponding beneficial effects of the method performed by the processor 1102, refer to FIG. 4 and FIG. 5. Details are not described herein again.

Correspondingly, the processor 1102 invokes the computer program stored in the memory 1101, to further perform method steps performed by the receiving unit 901 and the sending unit 902 in the signal sending apparatus 90 shown in FIG. 9. For specific content of the method steps, refer to FIG. 9. Details are not described herein again.

Correspondingly, the processor 1102 invokes the computer program stored in the memory 1101, to further perform method steps performed by the sending unit 1001, the receiving unit 1002, the training unit 1003, and the equalization unit 1004 in the signal equalization apparatus 100 shown in FIG. 10. For specific content of the method steps, refer to FIG. 10. Details are not described herein again.

In the electronic device 110 described in FIG. 11, after the optical module is powered on, a control signal is used to control the optical module to send a training signal before the optical module transmits an upstream control signal, and equalization parameter training is performed by using the training signal to obtain a target equalization parameter, so that the target equalization parameter is used for subsequent equalization for the upstream control signal, to improve signal equalization efficiency.

An embodiment of this application further provides a computer-readable storage medium. The computer-readable storage medium stores a computer program. When the computer program is run on one or more processors, the methods shown in FIG. 3, FIG. 4, and FIG. 5 may be implemented.

An embodiment of this application further provides a computer program product. When the computer program product runs on a processor, the methods shown in FIG. 3, FIG. 4, and FIG. 5 may be implemented.

An embodiment of this application further provides a chip. The chip includes a processor and a communication interface. The processor is configured to invoke instructions from the communication interface and run the instructions. When executing the instructions, the processor may implement the methods shown in FIG. 3, FIG. 4, and FIG. 5.

An embodiment of this application further provides a system. The system includes at least one of the foregoing signal sending apparatus 90, signal equalization apparatus 100, electronic device 110, or chip.

In conclusion, after an optical module is powered on, a control signal is used to control the optical module to send a training signal before the optical module transmits an upstream control signal, and equalization parameter training is performed by using the training signal to obtain a target equalization parameter, so that the target equalization parameter is used for subsequent equalization for the upstream control signal, to improve signal equalization efficiency.

A person of ordinary skill in the art may understand that all or some of the procedures in the methods in the foregoing embodiments may be completed by hardware related to a computer program. The computer program may be stored in a computer-readable storage medium. When the computer program is executed, the procedures in the foregoing method embodiments may be included. The foregoing storage medium includes any medium that can store computer program code, such as a read-only memory ROM or a random access memory RAM, a magnetic disk, or an optical disc.

## Claims

1. A signal sending method, applied to an optical module, and comprising:
receiving, by the optical module, a first control signal, wherein the first control signal indicates the optical module to send a training signal to a network side device, and the optical module is connected to the network side device through an electrical signal link; and
sending, by the optical module, the training signal, wherein the training signal is a signal to be used by the network side device to perform equalization parameter training.

2. The method according to claim 1, wherein the training signal is a signal generated by the optical module; or the training signal is a signal output by the optical module when the optical module receives a digital signal, and the digital signal is sent by the network side device to the optical module.

3. The method according to claim 1 or 2, wherein the method further comprises:
receiving a second control signal, wherein the second control signal indicates the optical module to send an upstream transmission signal to the network side device; and
sending the upstream transmission signal, wherein the upstream transmission signal is a signal equalized by using a target equalization parameter, and the target equalization parameter is obtained by performing equalization parameter training by using the training signal.

4. The method according to any one of claims 1 to 3, wherein the optical module comprises a sequence generator and a first multiplexer, and the sequence generator is coupled to the first multiplexer;
the receiving, by the optical module, a first control signal comprises:
receiving, by the first multiplexer, the first control signal; and
the sending, by the optical module, the training signal comprises:
controlling, by the first multiplexer by using the first control signal, the sequence generator to send the training signal to the network side device, wherein the training signal is generated by the sequence generator.

5. The method according to any one of claims 1 to 3, wherein the optical module comprises a first multiplexer and a second multiplexer, and the first multiplexer is coupled to the second multiplexer;
the receiving, by the optical module, a first control signal comprises:
receiving, by the first multiplexer, the first control signal; and
the sending, by the optical module, the training signal comprises:
controlling, by the first multiplexer by using the first control signal, the second multiplexer to send the training signal to the network side device, wherein the training signal is a signal output by the first multiplexer when the second multiplexer receives a digital signal, and the digital signal is sent by the network side device to the second multiplexer.

6. The method according to claim 4 or 5, wherein the optical module further comprises an amplifier, and the amplifier is coupled to the first multiplexer;
the receiving a second control signal comprises:
receiving, by the first multiplexer, the second control signal; and
the sending the upstream transmission signal comprises:
controlling, by the first multiplexer by using the second control signal, the amplifier to send the upstream transmission signal to the network side device.

7. A signal equalization method, comprising:
outputting, by a network side device, a first control signal, wherein the first control signal indicates an optical module to send a training signal to the network side device, and the network side device is connected to the optical module through an electrical signal link;
receiving, by the network side device, the training signal; and
performing, by the network side device, equalization parameter training by using the training signal, to obtain a target equalization parameter, wherein the target equalization parameter is used to equalize an upstream transmission signal.

8. The method according to claim 7, wherein the training signal is a signal generated by the optical module.

9. The method according to claim 7, wherein the training signal is a signal output by the optical module when the optical module receives a digital signal, and the digital signal is sent by the network side device to the optical module.

10. The method according to any one of claims 7 to 9, wherein the outputting a first control signal comprises:
outputting the first control signal when detecting that the optical module is inserted into the network side device and is powered on.

11. The method according to any one of claims 7 to 10, wherein the method further comprises:
outputting a second control signal, wherein the second control signal indicates the optical module to send the upstream transmission signal to the network side device;
receiving the upstream transmission signal; and
equalizing the upstream transmission signal by using the target equalization parameter.

12. A signal sending apparatus, used in an optical module, and comprising:
a receiving unit, configured to receive a first control signal, wherein the first control signal indicates the signal sending apparatus to send a training signal to a network side device, and the signal sending apparatus is connected to the network side device through an electrical signal link; and
a sending unit, configured to send the training signal, wherein the training signal is a signal to be used by the network side device to perform equalization parameter training.

13. The apparatus according to claim 12, wherein the training signal is a signal generated by the signal sending apparatus; or
the training signal is a signal output by the signal sending apparatus when the signal sending apparatus receives a digital signal, and the digital signal is sent by the network side device to the signal sending apparatus.

14. The apparatus according to claim 12 or 13, wherein the receiving unit is further configured to receive a second control signal, wherein the second control signal indicates the signal sending apparatus to send an upstream transmission signal to the network side device; and
the sending unit is further configured to send the upstream transmission signal, wherein the upstream transmission signal is a signal equalized by using a target equalization parameter, and the target equalization parameter is obtained by performing equalization parameter training by using the training signal.

15. The apparatus according to any one of claims 12 to 14, wherein the optical module comprises a sequence generator and a first multiplexer, and the sequence generator is coupled to the first multiplexer;
the first multiplexer is configured to receive the first control signal transmitted by the receiving unit; and
the first multiplexer is further configured to control, by using the first control signal, the sequence generator to send the training signal to the sending unit, wherein the training signal is generated by the sequence generator.

16. The apparatus according to any one of claims 12 to 14, wherein the optical module comprises a first multiplexer and a second multiplexer, and the first multiplexer is coupled to the second multiplexer;
the first multiplexer is configured to receive the first control signal transmitted by the receiving unit; and
the first multiplexer is further configured to control, by using the first control signal, the second multiplexer to send the training signal to the sending unit, wherein the training signal is a signal output by the first multiplexer when the second multiplexer receives a digital signal, and the digital signal is transmitted by the receiving unit to the second multiplexer.

17. The apparatus according to claim 15 or 16, wherein the optical module further comprises an amplifier, and the amplifier is coupled to the first multiplexer;
the first multiplexer is further configured to receive the second control signal; and
the first multiplexer is further configured to control, by using the second control signal, the amplifier to send the upstream transmission signal to the sending unit.

18. A signal equalization apparatus, comprising:
a sending unit, configured to output a first control signal, wherein the first control signal indicates an optical module to send a training signal to the signal equalization apparatus, and the signal equalization apparatus is connected to the optical module through an electrical signal link;
a receiving unit, configured to receive the training signal; and
a training unit, configured to perform equalization parameter training by using the training signal, to obtain a target equalization parameter, wherein the target equalization parameter is used to equalize an upstream transmission signal.

19. The apparatus according to claim 18, wherein the training signal is a signal generated by the optical module.

20. The apparatus according to claim 18, wherein the training signal is a signal output by the optical module when the optical module receives a digital signal, and the digital signal is sent by the signal equalization apparatus to the optical module.

21. The apparatus according to any one of claims 18 to 20, wherein the sending unit is specifically configured to output the first control signal when it is detected that the optical module is inserted into the signal equalization apparatus and is powered on.

22. The apparatus according to any one of claims 18 to 21, wherein the apparatus further comprises:
the sending unit, further configured to output a second control signal, wherein the second control signal indicates the optical module to send the upstream transmission signal to the signal equalization apparatus;
the receiving unit, further configured to receive the upstream transmission signal; and
an equalization unit, configured to equalize the upstream transmission signal by using the target equalization parameter.

23. A signal sending apparatus, comprising a processor and a communication interface, wherein
the communication interface is configured to receive or send a signal, and the processor is configured to execute computer-executable instructions, so that the signal sending apparatus performs the method according to any one of claims 1 to 6.

24. A signal equalization apparatus, comprising a processor and a communication interface, wherein
the communication interface is configured to receive or send a signal, and the processor is configured to execute computer-executable instructions, so that the signal equalization apparatus performs the method according to any one of claims 7 to 11.

25. A computer-readable storage medium, wherein
the computer-readable storage medium is configured to store instructions or a computer program; and
when the instructions or the computer program are/is executed, the method according to any one of claims 1 to 6 or claims 7 to 11 is implemented.

26. A computer program product, comprising instructions or a computer program, wherein
when the instructions or the computer program are/is executed, the method according to any one of claims 1 to 6 or claims 7 to 11 is implemented.

27. A signal processing system, comprising the signal sending apparatus according to any one of claims 12 to 17 or the signal sending apparatus according to claim 23, or the signal equalization apparatus according to any one of claims 18 to 22 or the signal equalization apparatus according to claim 24.
